# EUROPEAN PATENT SPECIFICATION

(11) **EP 1 622 297 B1**
(45) Date of publication and mention of the grant of the patent: **02.08.2017**
(21) Application number: 05006987.1
(22) Date of filing: 31.03.2005
(51) Int. Cl.: H04J 14/02

(54) **Optical add/drop multiplexer**
Optischer add/drop-Multiplexer
Multiplexeur optique à insertion/extraction

(30) Priority: 30.07.2004 JP 2004224210; 14.01.2005 JP 2005007046
(43) Date of publication of application: 01.02.2006
(73) Proprietor: FUJITSU LIMITED, Kawasaki-shi, Kanagawa 211-8588 (JP)
(72) Inventor: Nakagawa, Goji, Nakahara-ku, Kawasaki-shi, Kanagawa 211 (JP); Kai, Yutaka, Nakahara-ku, Kawasaki-shi, Kanagawa 211 (JP)
(74) Representative: Hoffmann Eitle

(56) References cited:
- EP-A- 1 271 827
- EP-A- 1 278 326
- WO-A2-99/65164
- JP-A- 2002 064 431
- US-A1- 2003 091 274
- US-A1- 2003 179 988

## Description

### BACKGROUND OF THE INVENTION

### (1) Field of the Invention

The present invention relates to an optical add/drop multiplexer (OADM) of adding or dropping signal light having a specific wavelength from wavelength division multiplexed (WDM) light obtained by multiplexing a plurality of rays of signal light having different wavelengths and, more particularly, to an optical add/drop multiplexer constructed by using an optical amplifier.

### (2) Related Art

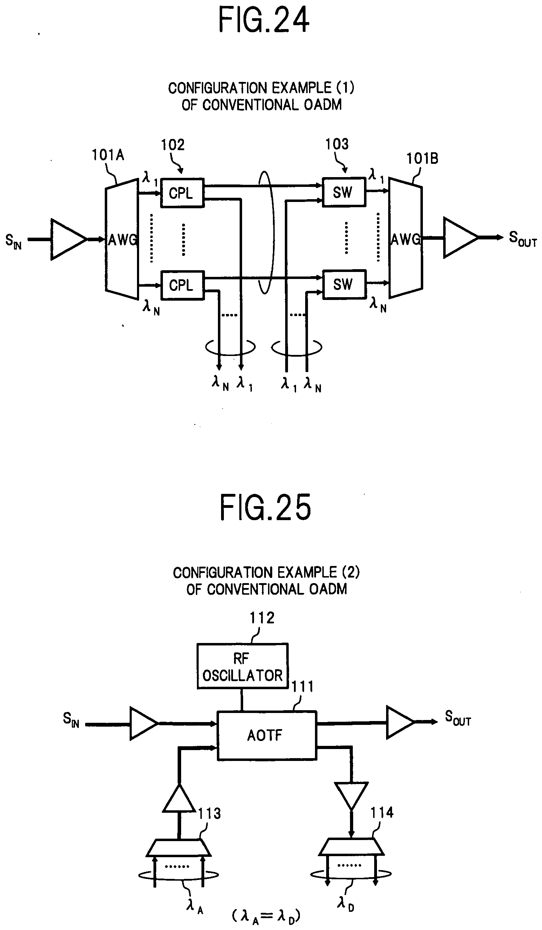

As the configuration of one of conventional optical add/drop multiplexer, for example, as shown in FIG. 24, a configuration in which two arrayed waveguide gratings (AWG) 101A and 101B are combined is known. The AWGs 101A and 101B are devices having the optical multiplexing/demultiplexing function. When WDM light is input to the-input port, light demultiplexed at each wavelength is output from each of the ports on the output side. On the other hand, when light having a predetermined wavelength is input to each of the ports, WDM light obtained by multiplexing the input light is output from one port on the output side. In an optical add/drop multiplexer constructed by using the AWGs 101A and 101B, WDM light S_{IN} input via an optical amplifier is demultiplexed to signal light having wavelengths λ₁ to λ_{N} by the AWG 101A, and drop, add, or pass-through of each of the light having the wavelengths λ₁ to λ_{N} is controlled by optical branch couplers (CPL) 102 and 2×1 optical switches (SW) 103 corresponding to the wavelengths λ₁ to λ_{N}. The signal light having the wavelengths λ₁ to λ_{N} output from the 2x1 optical switches 103 is multiplexed again by the AWG 101 B, and the resultant light is transmitted to a transmission line via an optical amplifier. In the optical add/drop multiplexer, the transmission wavelength characteristics of the AWGs 101A and 101 B are preliminarily designed in correspondence with the wavelengths λ₁ to λ_{N} of the WDM light transmitted, and input/output wavelength characteristics of the ports of the AWGs 101A and 101B are generally fixed. Consequently, it is important that the ports of the AWGs 101A and 101B and the signal light wavelengths are always clearly managed as the function of the optical add/drop multiplexer.

There is another configuration of the conventional optical add/drop multiplexer in which, for example, as shown in FIG. 25, add and drop of signal light is controlled by using an acousto-optic tunable filter (AOTF) having four ports (refer to, for example, Japanese Unexamined Patent Publication No. 11-218790). In the optical add/drop multiplexer, the WDM light S_{IN} input via an optical amplifier is given to one of the input ports of the AOTF 111, dropped by the AOTF 111 in accordance with the frequency of an RF signal supplied from an RF oscillator 112 to the AOTF 111, and the wavelength λ_{D} of drop light output from one of the output ports and the wavelength λ_{A} (= λ_{D}) of add light given to the other input port of the AOTF 111 are controlled. From the other output port of the AOTF 111, WDM light obtained by multiplexing through light and add light is output and is transmitted via an optical amplifier to a transmission line.

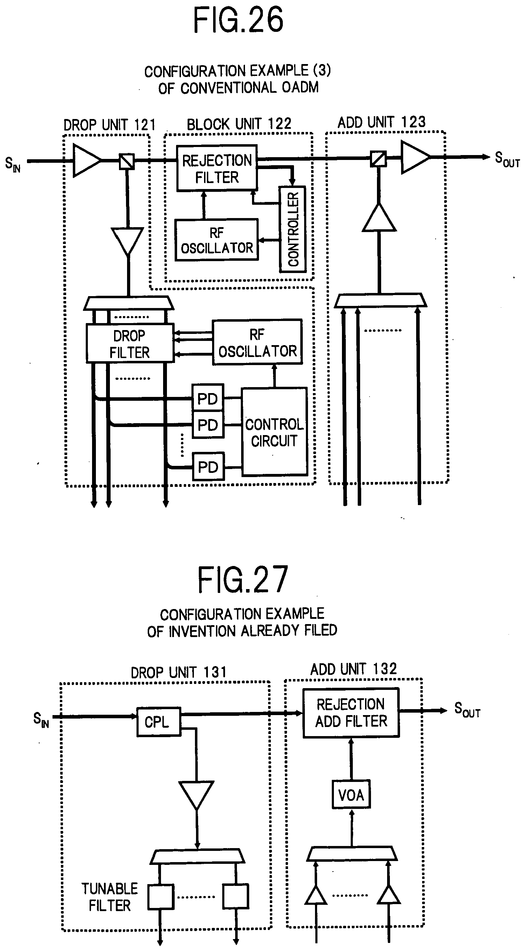

In further another configuration of the conventional optical add/drop multiplexer, for example, as shown in FIG. 26, a drop unit 121, a block unit 122, and an add unit 123 are connected in order (refer to, for example, Japanese Unexamined Patent Publication Nos. 2003-198477 and 2003-279909). In the drop unit 121 of the optical add/drop multiplexer, part of the input WDM light S_{IN} is dropped by the optical coupler, the resultant light is further dropped by the 1xN optical coupler and, after that, the wavelength λ_{D} the drop light is selected by a drop filter. In the block unit 122, the WDM light passed through the drop unit 121 is supplied to a rejection filter where passage of signal light matching the wavelength λ_{A} of add light is checked. In the add unit 123, add light is multiplexed to through light output from the block unit 122, and the resultant WDM light is transmitted to a transmission line via an optical amplifier. By dropping/adding signal light from/to the WDM light S_{IN} in such order, a loss which occurs in the optical node can be suppressed. Therefore, the basic configuration of the layout as described above is employed in many of conventional optical add/drop multiplexers.

The conventional optical add/drop multiplexer, however, has the following problems.

In the configuration in which two AWGs are combined as shown in FIG. 24, since the input/output wavelength characteristics of each of the ports of the AWG are fixed, when the number of wavelengths of signal light to be processed increases, management of the ports and the signal light wavelengths becomes complicated, and a problem occurs such that it is difficult to construct a flexible OADM node. Since an optical amplifier for compensating a loss in the two AWGs, the optical branch couplers, the 2×1 optical switches, and the like has to be provided for each of the input and output stages, there are also problems such that the size of the multiplexer becomes large and the cost increases.

On the other hand, with respect to the configuration using the AOTF shown in FIG. 25, the wavelengths of drop light, add light, and through light can be arbitrarily set in accordance with the frequency of an RF signal, so that a flexible OADM node can be constructed. However, the AOTF is very expensive and the optical amplifier has to be disposed in correspondence with each of the four ports of the AOTF. Consequently, there is a problem that increase in the cost and size of the optical add/drop multiplexer cannot be avoided.

Also with respect to the configuration in which the drop part, block part, and add part are disposed in order as shown in FIG. 26, the optical amplifier is disposed in correspondence with each of the input port, drop port, add port, and output port. Consequently, there is a problem such that the optical add/drop multiplexer has high cost and large size.

The applicant of the invention has proposed a configuration using a rejection add filter as shown in FIG. 27 to reduce the apparatus cost at the time of initial introduction in relation to the conventional configuration as shown in FIG. 26 (refer to, for example, Japanese Patent Application No. 2003-19067). In the example of the configuration of FIG. 27, a drop unit 131 is provided with the function of varying the wavelength of drop light by using a tunable filter. On the other hand, the wavelength of add light in an add part 132 is fixed and a rejection add filter is used. The rejection add filter is used both as a filter for adding signal light to a transmission line and a rejection filter for preventing signal light having the same wavelength as that of add light from being multiplexed and traveling on a network. By the rejection add filter, an optical loss of through light in the multiplexer can be reduced. By applying such a configuration, an optical add/drop multiplexer capable of constructing a flexible optical network at low cost can be provided. However, the configuration of the invention filed has a problem. Although an optical amplifier for WDM is disposed for a drop port of the drop part 131, an optical amplifier is not disposed on the in-line between the input and output ports. Consequently, it is difficult to increase the transmission distance between optical nodes. In the case of separately providing an in-line amplifier to solve the problem, the cost increases. Since an optical amplifier for each wave is disposed for each wavelength of add light in the add part 132, also in the case where the number of wavelengths of add light increases, the cost increases.

JP 2002 064431 A discloses that to provide an optical ADM equipment having a simple configuration, an optical ADM equipment has a first optical device, a second optical device, an optical amplifier provided between a third port of the first optical device and a first port of the second optical device, and a coupling means for coupling to each other optically a fourth port of the first optical device and a fourth port of the second optical device. By such an optical ADM equipment, the addition by a wavelength component to a wavelength multiplexing signal including a plurality of wavelength components and the dropping of a wavelength component from a wavelength multiplexing signal are made possible. The added and dropped wavelength-components are amplified together with in the optical amplifier.

### SUMMARY OF THE INVENTION

The present invention has been achieved by paying attention to the above points and its object is to provide a small and low-cost optical add/drop multiplexer capable of constructing a flexible OADM node.

To achieve the object, according to a first aspect of the invention, there is provided an optical add/drop multiplexer as set out in Claim 1.

According to a second aspect of the invention, there is provided an optical add/drop multiplexer as set out in Claim 10.

In the optical add/drop multiplexers in various embodiments, on precondition that the wavelength λ_{A} of add light and the wavelength λ_{D} of drop light are made different from each other, addition of the signal light having the wavelength λ_{A} to the WDM light S_{IN} input from the transmission line L, amplification of the WDM light, and drop of the signal light having the wavelength λ_{D} are performed in this order. Before addition of signal light or after drop of signal light, signal light having the same wavelength as that of the add light or drop light included in the WDM light is blocked. It makes unnecessary to provide a plurality of optical amplifiers in the optical add/drop multiplexers unlike the conventional configuration.

In the optical add/drop multiplexer of embodiments of the invention, it is sufficient to dispose one amplifying part to realize addition, drop, and through of signal light having a specific wavelength to/from WDM light input from a transmission line. Thus, a small and cheap optical add/drop multiplexer can be provided. Since the amplifying part is disposed on in-line, the transmission distance between nodes on an optical network can be also increased.

The other objects, features, and advantages of the present invention will become apparent from the following description of embodiments related to appended drawings.

### BRIEF DESCRIPTION OF THE DRAWINGS

FIG. 1 is a configuration diagram showing a mode of an optical add/drop multiplexer of an embodiment of the invention.
FIG. 2 is a configuration diagram showing another mode of the optical add/drop multiplexer of an embodiment of the invention.
FIG. 3 is a block diagram showing the configuration of an optical add/drop multiplexer according to a first embodiment of the invention.
FIG. 4 is a diagram showing an example of setting of an optical path on an optical network in the first embodiment.
FIG. 5 is a block diagram showing the configuration of an optical add/drop multiplexer according to a second embodiment of the invention.
FIGS. 6A and 6B are diagrams showing a concrete example of a rejection add filter used in the second embodiment.
FIG. 7 is a block diagram showing the configuration of an optical add/drop multiplexer according to a third embodiment of the invention.
FIG. 8 is a block diagram showing another configuration example related to the third embodiment.
FIG. 9 is a block diagram showing another configuration example related to the third embodiment.
FIG. 10 is a block diagram showing the configuration of an optical add/drop multiplexer according to a fourth embodiment of the invention.
FIG. 11 is a block diagram showing the configuration of an optical add/drop multiplexer according to a fifth embodiment of the invention.
FIG. 12 is a block diagram showing the configuration of an optical add/drop multiplexer according to a sixth embodiment of the invention.
FIG. 13 is a block diagram showing another configuration example related to the sixth embodiment.
FIG. 14 is a block diagram showing the configuration of an optical add/drop multiplexer according to a seventh embodiment of the invention.
FIG. 15 is a diagram showing an example of applying the conventional configuration for compensating wavelength dispersion to the optical add/drop multiplexer of FIG. 14.
FIG. 16 is a diagram showing a result of comparison in a position where the wavelength dispersion compensation is performed on the configuration of an embodiment of the invention.
FIG. 17 is a block diagram showing a modification in which an optical amplifier is provided at the former stage of a dispersion compensating fiber in the seventh embodiment.
FIG. 18 is a block diagram showing the configuration of an optical add/drop multiplexer according to an eighth embodiment of the invention.
FIG. 19 is a diagram showing a concrete example of a wavelength selective switch used in the eighth embodiment.
FIG. 20 is a schematic diagram for explaining the characteristics of the wavelength selective switch.
FIG. 21 is a block diagram showing a configuration example which can correspond to multicast transmission and broadcast transmission in the eighth embodiment.
FIG. 22 is a diagram showing an example for adding a ring network in the case of applying a wavelength selective switch to the conventional configuration.
FIG. 23 is a diagram showing an example of adding a ring network in the eighth embodiment.
FIG. 24 is a diagram showing a configuration example of a conventional optical add/drop multiplexer.
FIG. 25 is a diagram showing another configuration example of the conventional optical add/drop multiplexer.
FIG. 26 is a diagram showing another configuration example of the conventional optical add/drop multiplexer.
FIG. 27 is a diagram showing the configuration of an optical add/drop multiplexer according to the invention filed.

### DETAILED DESCRIPTION OF THE EMBODIMENTS

Best modes for carrying out an optical add/drop multiplexer of the invention will be described hereinbelow with reference to the appended drawings. The same reference numeral in the diagrams denotes the same or corresponding part.

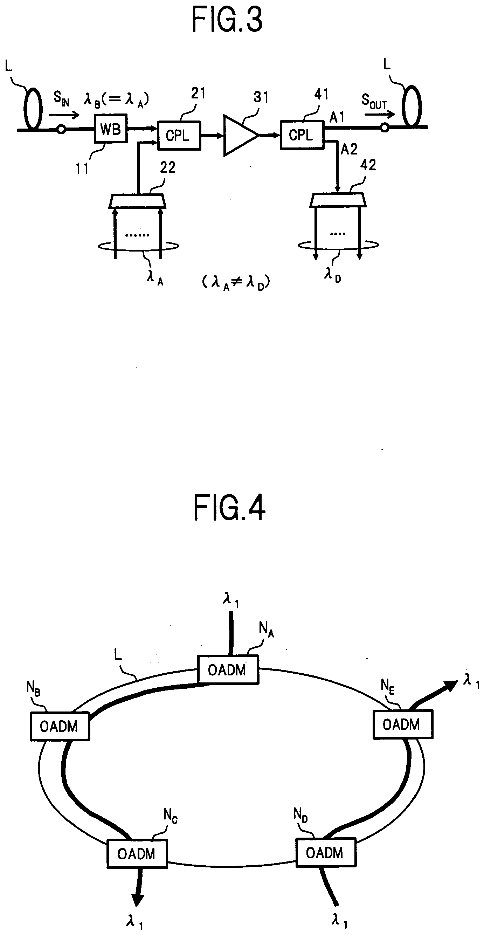

FIG. 3 is a block diagram showing the configuration of an optical add/drop multiplexer according to a first embodiment of the invention.

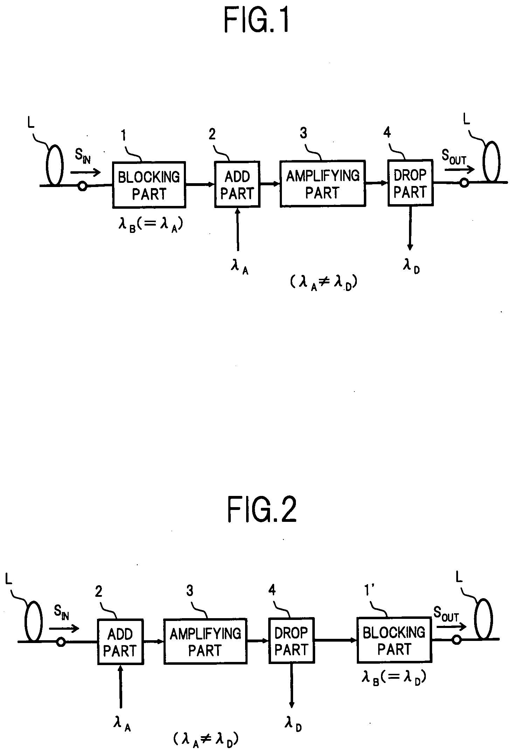

In FIG. 3, an optical add/drop multiplexer of the embodiment has, for example, a wavelength blocker (WB) 11 as the blocking unit 1 in the basic configuration shown in FIG. 1, an optical coupler (CPL) 21 and a WDM coupler 22 as the inserting unit 2, a WDM optical amplifier 31 as the amplifying unit 3, and an optical branch coupler (CPL) 41 and an optical filter circuit 42 as the dropping unit 4.

WDM light SIN propagating through a transmission line L of an optical network constructing an OADM node by using the optical add/drop multiplexer is supplied to the input port of the wavelength blocker 11. The wavelength blocker 11 is a known optical device of blocking passage of light in a wavelength band which is preliminarily selected for input light and passing and outputting the other light from the output port. In the following, the wavelength bandwidth of light blocked by the wavelength blocker 11 will be called a block wavelength band Δλ_{B}. The block wavelength band Δλ_{B} is set to a wavelength band which includes the wavelength of add light in the optical add/drop multiplexer and does not include the wavelength λ_{D} of drop light and the wavelength λ_{T} of through light. Specifically, when a plurality of signal lights whose wavelengths are adjacent to each other are added in the optical add/drop multiplexer, the wavelength characteristics of the wavelength blocker 11 are set so that the block wavelength band λ_{B} almost coincides with the wavelength band λ_{A} of the add light. Therefore, in the wavelength blocker 11, signal light having the wavelength matching the wavelength λ_{A} of add light in the optical add/drop multiplexer out of signal light of a plurality of wavelengths included in the input light S_{IN} is blocked, and signal light having the wavelength matching the wavelength λ_{D} of drop light and the wavelength λ_{T} of through light is output from the output port to the optical coupler 21 at the post stage. When the wavelength blocker 11 of the embodiment has the block wavelength band λ_{B} satisfying the relation, the block wavelength band λ_{B} may be fixed or variable.

The optical coupler 21 is a general optical coupler having two input ports and one output port. One of the input ports is connected to the output port of the wavelength blocker 11, and the other input port is connected to the multiplexing-side port of the WDM coupler 22. The output port is connected to the input port of the WDM optical amplifier 31. In the optical coupler 21, signal light passed through the wavelength blocker 11 and add light output from the WDM coupler 22 are multiplexed and the resultant is output from the output port to the WDM optical amplifier 31 at the post stage.

The WDM coupler 22 receives signal light of a plurality of wavelengths added in the optical add/drop multiplexer by the demultiplexing-side ports corresponding to the wavelengths, wavelength-multiplexes the signal light, and outputs the resultant from a multiplexing-side port.

The WDM optical amplifier 31 is a known optical amplifier capable of amplifying output light from the optical coupler 21 in a lump. As the WDM optical amplifier 31, concretely, for example, a rare-earth-doped optical fiber amplifier, a Raman amplifier, a semiconductor optical amplifier, or the like can be used.

The optical branch coupler 41 is a general optical coupler having one input port and two output ports, branching light supplied to the input port into two lights at a predetermined power ratio, and outputting the branched light from the output ports. In this case, the branching ratio of the optical branch coupler 41 is expressed as A1:A2. In the optical branch coupler 41 of the embodiment, the WDM light amplified by the WDM optical amplifier 31 is input to the input port, the light branched to the power of A1/(A1+A2) is output as output light S_{OUT} of the optical add/drop multiplexer from one of the output ports, and the light branched to the power of A2/(A1+A2) is output from the other output port to the optical filter circuit 42.

The optical filter circuit 42 receives the light branched by the optical branch coupler 41 by its input port, extracts signal light having the wavelength λ_{D} to be branched (dropped) in the optical add/drop multiplexer from the input light, and outputs the extracted signal light from a corresponding output port.

The operation of the optical add/drop multiplexer of the first embodiment will now be described.

In the optical add/drop multiplexer having the configuration as described above, when WDM light propagating the transmission line L is input, the input light S_{IN} is supplied first to the wavelength blocker 11 where the signal light having the same wavelength as that of add light to be multiplexed by the optical coupler 21 at the post stage in the signal light having the wavelengths included in the input signal S_{IN} is blocked. By blocking the signal light having the same wavelength as that of the add light before the add light is multiplexed to prevent the signal light having the wavelength from making more than one round of the ring-shaped optical network, for example, as shown in FIG. 4, in the case of setting an optical path for adding signal light having the wavelength λ₁ at a node N_{A} and dropped at a node N_{C}, the optical path of the wavelength λ₁ can be set also in an interval after a node N_{D} downstream of the node N_{C}. Specifically, when the optical add/drop multiplexer used for each of the nodes of the ring-shaped optical network does not have the wavelength blocker 11, part of the signal light having the wavelength λ₁ transmitted between the nodes N_{A} and N_{C} (the wavelength λ₁ component of the output light S_{OUT} obtained by branching the signal light by the optical branch coupler 41 at the node N_{C} into two lights and transmitted on the network) travels also after the node N_{D}, so that an optical path having the wavelength λ₁ cannot be separately set between the nodes N_{D} and N_{E}. On the other hand, in the configuration of the embodiment, the signal light having the wavelength λ₁ output onto the network from the node N_{C} is blocked at the first stage in the optical add/drop multiplexer at the node N_{D}, so that the signal light having the wavelength λ₁ can be transmitted also between the nodes N_{D} and N_{E}, and the optical network can be efficiently used.

To the signal light passed through the wavelength blocker 11 (FIG. 3), add light multiplexed by the WDM coupler 22 is multiplexed by the optical coupler 21. Since the power of the add light to be multiplexed can be amplified to a required level in the WDM optical amplifier 31 disposed at the post stage of the optical coupler 21, unlike the conventional configuration of the add part (refer to, for example, FIGS. 26 and 27), it is unnecessary to dispose an optical amplifier on the optical path connected on the add port side of the optical coupler. Desirably, with respect to the WDM light multiplexed by the optical coupler 21, the power per wavelength of add light is set to be almost the same as the power per wavelength of the signal light passed through the wavelength blocker 11. For this purpose, for example, the multiplexing characteristics of the optical coupler 21 are optimized in accordance with the add light supply state and the like.

The WDM light to which the add light is multiplexed in the optical coupler 21 is amplified by the WDM optical amplifier 31. After that, the resultant light is sent to the optical branch coupler 41 and is branched into two lights at the power branching ratio of A1:A2. The branching ratio of the optical branch coupler 41 is set so that, in consideration of the gain in the WDM optical amplifier 31, for example, the total power of the output light S_{OUT} becomes the level corresponding to an input dynamic range of a downstream optical node and the power per wavelength of drop light in the optical node satisfies a preset specific value. In the drop part having the conventional configuration, to reduce the optical loss of through light, the branching ratio is set so that the power ratio (A2) on the drop port side is sufficiently lower than the power ratio (A1) on the through port side of the optical branch coupler (for example, A1:A2 = 20:1). Consequently, in the conventional configuration, an optical amplifier for amplifying drop light has to be disposed on an optical path connected to the drop port. In contrast, in the configuration of the embodiment, the power of WDM light input to the optical branch coupler 41 can be amplified to a necessary level by the WDM optical amplifier 31. Even when the power ratio (A2) on the drop port side is set to be relatively high (for example, A1:A2 = 1:1), the output light S_{OUT} of a sufficiently high power level can be assured. Therefore, by properly setting the gain of the WDM optical amplifier 31 and the branching ratio of the optical branch coupler 41, the performance requested for an OADM node can be satisfied only by a single WDM optical amplifier 31. By setting the gain of the WDM optical amplifier 31 high to increase the power of the output light S_{OUT}, the transmission distance between nodes can be also increased.

According to the first embodiment as described above, the wavelength λ_{A} of add light and the wavelength λ_{D} of drop light are made different from each other, blocking of light having the same wavelength as that of the add light to the input light S_{IN}, addition of the signal light having the wavelength λ_{A}, and drop of the signal light having the wavelength λ_{D} are performed in this order and, in addition, after addition of the signal light having the wavelength λ_{A}, the WDM light from which the signal light having the wavelength λ_{D} is dropped is amplified. With the configuration, unlike the conventional configuration, it becomes unnecessary to provide a plurality of optical amplifiers in the optical add/drop multiplexer. Thus, reduction in size and cost of the optical add/drop multiplexer can be realized. Since the WDM optical amplifier is disposed on the in-line between the input port and the output port of the optical add/drop multiplexer, the transmission distance between nodes on the optical network can be also increased.

A second embodiment of the invention will now be described.

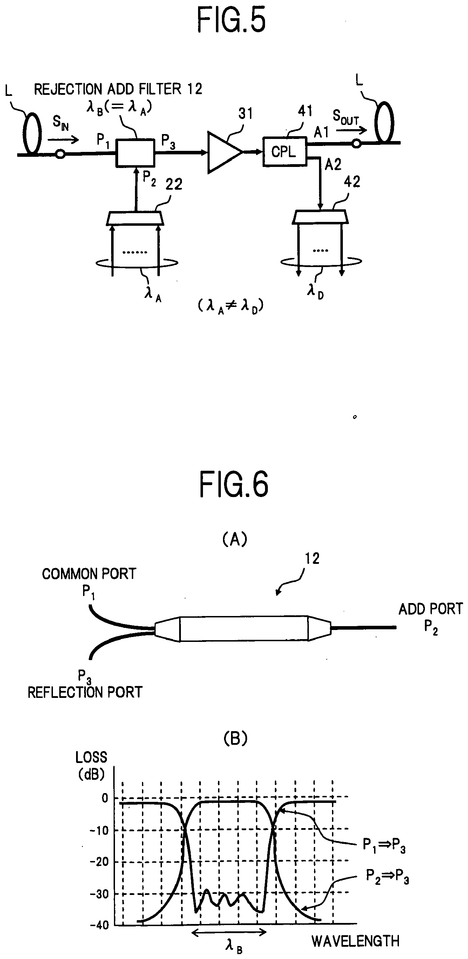

FIG. 5 is a block diagram showing the configuration of an optical add/drop multiplexer according to a second embodiment of the invention.

In FIG. 5, the different part of the configuration of the optical add/drop multiplexer of the second embodiment from that of the first embodiment (FIG. 3) is that a rejection add filter 12 is provided in place of the wavelength blocker 11 and the optical coupler 21 used in the first embodiment. Since the other configuration is similar to that of the first embodiment, its description will not be repeated.

The rejection add filter 12 is a known optical filter having, for example, as shown in (A) of FIG. 6, three ports; a common port P₁ an add port P₂, and a reflection port P₃ and realizing, as shown in (B) of FIG. 6, by a thin film filter (TFF) internally provided, a transmission (or reflection) wavelength characteristic from the common port P₁ to the reflection port P₃ and a transmission (or reflection) wavelength characteristic from the add port P₂ to the reflection port P₃. In this case, the WDM light S_{IN} from the transmission line L is input to the common port P₁ of the rejection add filter 12, add light output from the WDM coupler 22 is supplied to the add port P₂, and the reflection port P₃ is connected to the input port of the WDM optical amplifier 31, thereby realizing both of the functions of the wavelength blocker 11 and the optical coupler 21 in the first embodiment by a single device. The rejection add filter 12 has, generally, the fixed block wavelength λ_{B} and the fixed add wavelength λ_{A} and is provided with a configuration utilizing above characteristic, so that it is an optical part useful to realize reduction in the size and cost of the apparatus. As a concrete example of the rejection add filter 12, a commercially available product such as "4 Skip 1 Filter" manufactured by Fibernett Co., Ltd. can be used. At the time of using such a commercially available product, in the case where the characteristic such as a cut-off loss of the block wavelength λ_{B} is insufficient, by connecting the filters in multiple stages (by connecting the common port P₁ and the reflection port P₃ to each other), a desired cut-off characteristic can be obtained.

By applying the rejection add filter 12 as described above, the two functions of blocking the signal light having the same wavelength as the wavelength λ_{A} of add light at the optical node in signal light having wavelengths included in the input light S_{IN} and multiplexing the signal light having the other wavelengths included in the input light S_{IN} and add light output from the WDM coupler 22 can be realized by a single device. With the configuration, the optical loss of through light in the optical add/drop multiplexer can be reduced and a smaller optical add/drop multiplexer can be provided at lower cost.

A third embodiment of the invention will now be described. As the third embodiment, a concrete application example of the optical add/drop multiplexer of the first embodiment will be described.

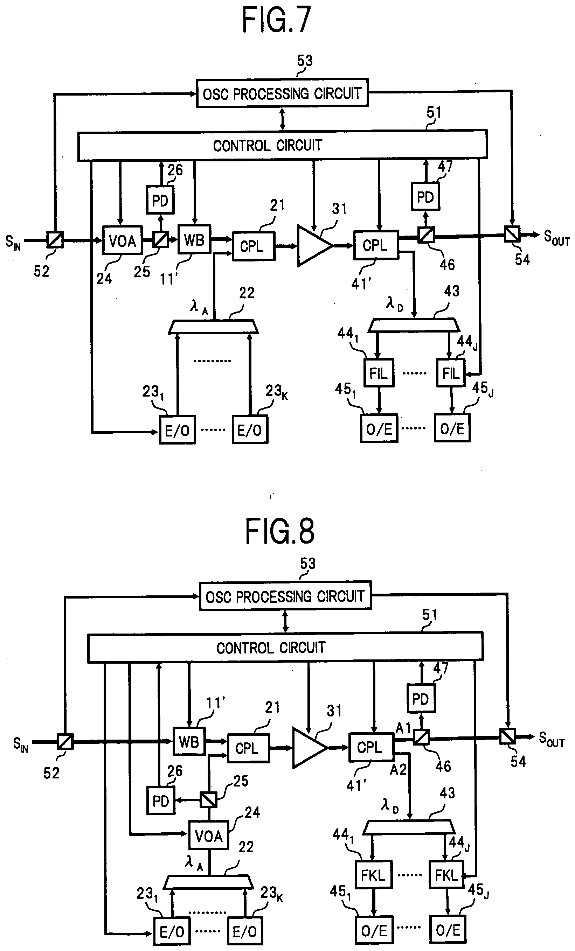

FIG. 7 is a block diagram showing the configuration of an optical add/drop multiplexer according to the third embodiment of the invention.

A feature of the optical add/drop multiplexer shown in FIG. 7 is that a variable optical branch coupler 41' whose branching ratio is variable is provided in place of the optical branch coupler 41 in the drop part in the first embodiment so that the power of the WDM light S_{IN} and drop light transmitted to a node on the downstream can be controlled by adjusting the branching ratio of the variable optical branch coupler 41' in accordance with setting of the wavelength of drop light or the like in the node. Another feature of the optical add/drop multiplexer is that a variable optical attenuator 24 is inserted at the former stage of a wavelength blocker 11' so as to control the balance of the power of through light and add light multiplexed by the optical coupler 21.

Concretely, to handle a change in the setting of the wavelength of drop light, a 1xJ optical branch coupler 43, J pieces of tunable filters 44₁ to 44_{J}, and J pieces of receivers (O/E) 45₁ to 45_{J} are provided after the drop port of the variable optical branch coupler 41' on assumption that the maximum wavelengths of drop light which can be set for the node is J. After the through port of the variable optical branch coupler 41', an optical branch coupler 46 and a photodetector (PD) 47 for monitoring the power of output light S_{IN} - are disposed. A concrete configuration of the variable optical branch coupler 41' can be realized by applying, for example, the configuration described in "Two-port optical wavelength circuits composed of cascaded Mach-Zehnder interferometers with point-symmetrical configurations" by Kaname Jinguji et al., JOURNAL OF LIGHTWAVE TECHNOLOGY VOL. 14, No. 10, October 1996 or "waveguide-type optical multi/demultiplexer" disclosed in Japanese Patent No. 2,691,097. Alternately, "Polarization Maintaining Variable Ratio Evanescent Wave Couplers" (Product Data 905(P)/905(P)-E) of CIR Ltd. or the like can be also used.

To handle a change in the setting of the wavelength of add light, K pieces of wavelength variable transmitters (E/O) 23₁ to 23_{K} are provided, light output from the wavelength variable transmitters 23₁ to 23_{K} is multiplexed by the WDM coupler 22, and the resultant light is supplied to the optical coupler 21 on assumption that the maximum wavelengths of add light which can be set for the node is K. It is further assumed that the dynamic wavelength blocker 11' is used and the block wavelength band Δλ_{B} is also variable. In addition, an optical branch coupler 25 and a photodetector (PD) 26 for monitoring the power of output light from the variable optical attenuator 24 are disposed between the variable optical attenuator 24 and the dynamic wavelength blocker 11'. As concrete examples of the dynamic wavelength blocker 11', a commercially available product called "Dynamically Reconfigurable Wavelength Blocker for C or Extended L Band" manufactured by JDS Uniphase Corporation, "PowerBlocker™" of AVANEX Corporation, and the like can be used.

A signal indicative of the power of output light from the variable optical attenuator 24 monitored by the photodetector 26 and a signal indicative of the power of the output light S_{OUT} monitored by the photodetector 47 are sent to a control circuit 51. To the control circuit 51, in addition to the monitor results of the photodetectors 26 and 47, wavelength information of signal light obtained by an OSC processing circuit 53 is supplied. On the basis of the information, the branching ratio of the variable optical branch coupler 41', the set gain of the WDM optical amplifier 31, transmission wavelengths of the tunable filters 44₁ to 44_{J}, output wavelengths of the wavelength variable transmitters 23₁ to 23_{K}, an attenuation amount of the variable optical attenuator 24, and the block wavelength band Δλ_{B} of the dynamic wavelength blocker 11' are controlled. The OSC processing circuit 53 extracts optical supervisory channel (OSC) light transmitted together with signal light from an upstream node by a demultiplexer 52 provided at an input terminal of the optical add/drop multiplexer, performs a process of identifying the wavelength information of the signal light included in the optical supervisory channel light, generates optical supervisory channel light to be transmitted to a downstream node, multiplexes the generated light with output light S_{OUT} by a multiplexer 54 provided at an output terminal of the optical add/drop multiplexer, and transmits the resultant light onto an optical network.

The control on the branching ratio of the variable optical branch coupler 41' and the set gain of the WDM optical amplifier and the control on the attenuation amount of the variable optical attenuator 24 performed by the control circuit 51 will now be described in detail.

In the optical add/drop multiplexer, as described above, by adjusting the branching ratio of the variable optical branch coupler 41' in accordance with the wavelength setting of drop light or the like, the power of the WDM light S_{IN} and that of the drop light to be transmitted to a downstream node are controlled. Concretely, according to the wavelength information of the signal light transmitted from the OSC processing circuit 53 to the control circuit 51, the wavelength settings such as the wavelength of drop light and wavelength arrangement in the node are determined. In correspondence with the wavelength settings of the drop light, the transmission wavelengths of the tunable filters 44₁ to 44_{J} are optimized by the control circuit 51. Simultaneously, the branching ratio (A1:A2) of the variable optical branch coupler 41' is optimized by the control circuit 51 so that the power of each drop light corresponding to the wavelength settings satisfies a preset specific value and the total power of the output light S_{OUT} becomes the level corresponding to the input dynamic range of a downstream node. For example, it is assumed that a setting change of increase in the wavelength of drop light occurs. In this case, the branching ratio is adjusted so that the power of light output to the drop port side of the variable optical branch coupler 41' increases. Since the total power of the light S_{OUT} output to the transmission port side decreases by the adjustment of the branching ratio, the change is monitored by the optical branch coupler 46 and the photodetector 47. In the case where the total power of the output light S_{OUT} decreases to a level which is out of the input dynamic range of a downward node, the gain setting of the WDM optical amplifier 31 is adjusted to control the total power of the output light S_{OUT}. When the total power of the output light S_{OUT} after adjustment of the branching ratio is at the level corresponding to the input dynamic range of a downstream node, it is unnecessary to adjust the gain setting of the WDM optical amplifier 31.

In the optical add/drop multiplexer, by adjusting the attenuation amount of the variable optical attenuator 24 in accordance with the wavelength settings of add light, the balance of the power of through light and the power of add light multiplexed by the optical coupler 21 is controlled. Concretely, according to the wavelength information of the signal light transmitted from the OSC processing circuit 53 to the control circuit 51, the wavelength settings such as the wavelength of add light and wavelength arrangement in the node are determined. In correspondence with the wavelength settings of the add light, the output wavelengths of the wavelength variable transmitters 23₁ to 23_{K} and the block wavelength band Δλ_{B} of the dynamic wavelength blocker 11' are optimized by the control circuit 51. Simultaneously, the attenuation amount of the variable optical attenuator 24 is optimized by the control circuit 51 with reference to a monitor value of the photodetector 26 so that the power per wavelength of the through light and that of add light to be multiplexed by the optical coupler 21 become almost equal to each other.

By the control on the variable devices by the control circuit 51, even in the case where a change occurs in the wavelength settings of drop light and add light, signal light can be stably added and dropped. Thus, a flexible OADM node can be constructed.

In the foregoing third embodiment, the configuration example of disposing the variable optical attenuator 24 at the former stage of the dynamic wavelength blocker 11' to control the balance between the power of through light and the power of add light to be multiplexed by the optical coupler 21 has been described. Alternately, for example, as shown in FIG. 8, the variable optical attenuator 24 may be disposed on an optical path connected to the add port of the optical coupler 21 and adjust the power of add light multiplexed by the WDM coupler 22, thereby controlling the balance of the powers. Although not shown, it is also possible to control the balance of the powers by disposing the variable optical attenuator both at the former stage of the dynamic wavelength blocker 11' and on the optical path connected to the add port of the optical coupler 21.

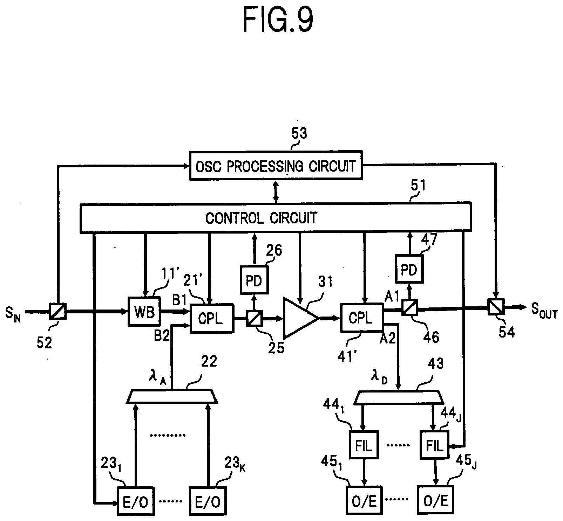

Further, the control on the powers of the through light and the add light is not limited to adjustment of the attenuation amount of the variable optical attenuator. For example, as shown in FIG. 9, the through light and the add light are multiplexed by using an optical coupler 21' whose multiplexing ratio of powers of light to be supplied to input ports is variable and, by adjusting the multiplexing characteristic of the optical coupler 21', the power of the through light and that of add light may be controlled. A concrete example of the optical coupler 21' having the variable multiplexing characteristic is similar to that of the variable optical branch coupler 41'.

In addition, in the foregoing third embodiment, an application example of the configuration of the foregoing first embodiment has been described. The configuration of the second embodiment using the rejection add filter can be also applied.

Next, a fourth embodiment of the invention will be described.

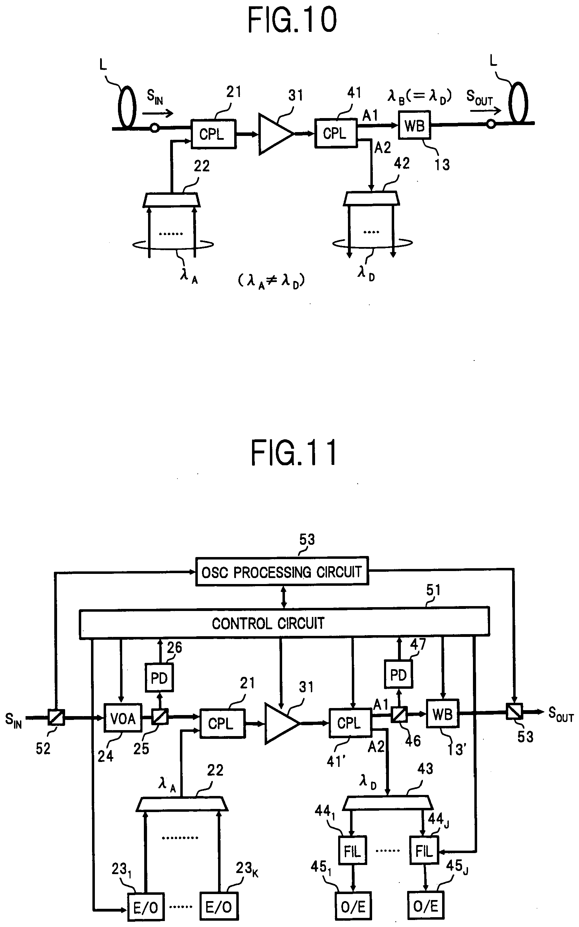

FIG. 10 is a block diagram showing the configuration of an optical add/drop multiplexer according to the fourth embodiment of the invention.

In FIG. 10, the different part of the configuration of the optical add/drop multiplexer of the fourth embodiment from that of the first embodiment (FIG. 3) is that a wavelength blocker 13 is disposed on the optical path connected to the through port of the optical branch coupler 41 in place of the wavelength blocker 11 disposed at the former stage of the optical coupler 21 in the first embodiment. Since the other configuration is similar to that of the first embodiment, its description will not be repeated.

The block wavelength band Δλ_{B} of the wavelength blocker 13 is set to a wavelength band which includes the wavelength Δλ_{D} of drop light in the optical add/drop multiplexer and does not include the wavelength of add light and the wavelength λ_{T} of through light. That is, when a plurality of signal lights whose wavelengths are neighboring in the optical add/drop multiplexer are dropped, the wavelength characteristics of the wavelength blocker 13 are set so that the block wavelength band Δλ_{B} almost matches the wavelength band Δλ_{D} of the drop light. Therefore, in the wavelength blocker 13, signal light having the wavelength matching the wavelength Δλ_{D} of drop light in the optical add/drop multiplexer out of the signal light of a plurality of wavelengths included in the output light S_{OUT} is blocked, and the add light having the wavelength Δλ_{A} and the through light having the wavelength Δλ_{T} is output toward a downstream node.

In the optical add/drop multiplexer with the above-described configuration, signal light having the wavelength Δλ_{D} included in the output light S_{OUT} is blocked after drop of the drop light, thereby avoiding the signal light having the wavelength Δλ_{D} from making more than one round of traveling on a ring-shaped optical network. Consequently, as shown in FIG. 4, in the case of setting an optical path for adding signal light having the wavelength λ₁ at a node N_{A} and dropped at a node N_{C}, the optical path of the wavelength λ₁ can be set also in an interval after a node N_{D} downstream of the node N_{C}. Therefore, effects similar to those of the first embodiment can be obtained also by the optical add/drop multiplexer of the fourth embodiment.

A fifth embodiment of the invention will now be described.. In the fifth embodiment, a concrete application example of the optical add/drop multiplexer of the fourth embodiment will be shown.

FIG. 11 is a block diagram showing the configuration of an optical add/drop multiplexer according to the fifth embodiment of the invention.

The configuration of the optical add/drop multiplexer shown in FIG. 11 is basically the same as that of the third embodiment (FIG. 7) but is different with respect to the point that a dynamic wavelength blocker 13' is disposed on an optical path connected to the through port of the optical branch coupler 41 in correspondence with the configuration of the fourth embodiment. The optical add/drop multiplexer with such a configuration can also obtain operations and effects similar to those of the foregoing third embodiment.

Although a concrete application example of the fourth embodiment corresponding to the configuration shown in FIG. 7 has been described in the fifth embodiment, similarly, an application example corresponding to the configuration shown in FIG. 8 or 9 may be also employed.

Next, a sixth embodiment of the invention will be described. An application example will be shown in which even in the case where an abnormal state (failure in a WDM optical amplifier, a failure of power supply, or the like) occurs in an optical add/drop multiplexer, communication between the optical add/drop multiplexer and another node on an optical network is not interrupted.

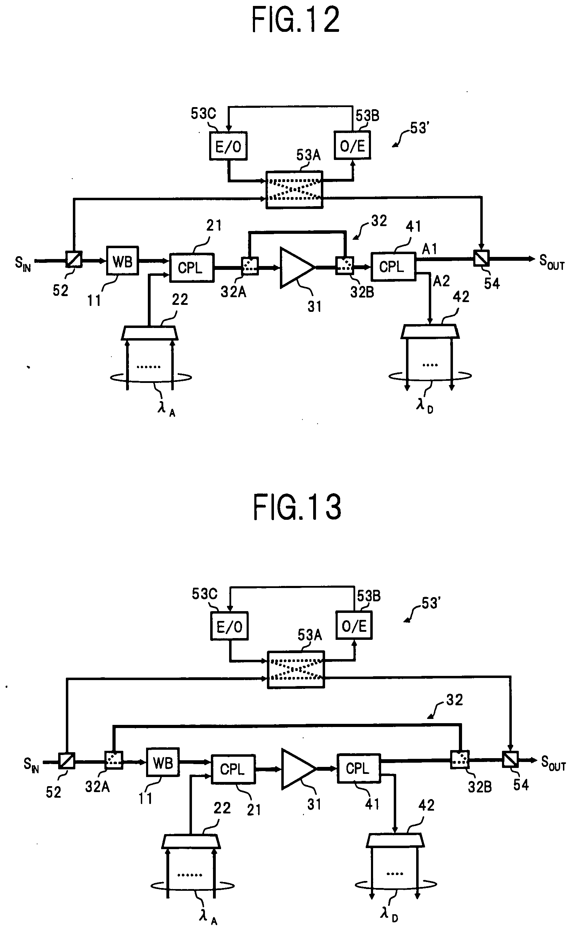

FIG. 12 is a block diagram showing the configuration of an optical add/drop multiplexer according to the sixth embodiment of the invention.

In FIG. 12, the optical add/drop multiplexer is obtained by, for example, adding a detour optical path 32 for detouring WDM light at the time of a failure of the WDM optical amplifier 31, and an OSC processing circuit 53' having the function of passing optical surveillance channel light to be transmitted to the node at the time of failure of power supply to the configuration of the first embodiment (FIG. 3).

The detour circuit 32 is formed by, for example, inserting 1 x2 optical switches 32A and 32B at the former stage and the post stage of the WDM optical amplifier 31 and directly connecting the cross terminals of the 1 x2 optical switches 32A and 32B to each other. The operation of switching the 1 x2 optical switches 32A and 32B is controlled by a not-shown switch control circuit. The 1 x2 optical switches 32A and 32B are in a bar state when the WDM optical amplifier 31 operates normally and are in a cross state when a failure occurs in the WDM optical amplifier 31.

The OSC processing circuit 53' has, for example, a 2x2 optical switch 53A, an OSC receiver 53B, and an OSC transmitter 53C which are connected to each other so that optical supervisory channel (OSC) light demultiplexed by the demultiplexer 52 provided at the input terminal of the optical add/drop multiplexer is supplied to the OSC receiver 53B via the 2x2 optical switch 53A and optical supervisory channel (OSC) light generated by the OSC transmitter 53C is supplied via the 2x2 optical switch 53A to the multiplexer 54 provided at the output terminal of the optical add/drop multiplexer. The operation of switching the 2x2 optical switch 53A is controlled by a not-shown switch control circuit, and the 2x2 optical switch 53A is in a cross state when conducted, and is in a bar state at the time of power supply failure.

In the optical add/drop multiplexer of the first embodiment, when a failure occurs in the WDM optical amplifier 31, the WDM optical amplifier 31 cannot transmit WDM light from the former stage to the post stage, so that communication of the whole optical network is interrupted. To avoid such a situation, in the optical add/drop multiplexer of the sixth embodiment, when a failure occurs in the WDM optical amplifier 31, each of the 1x2 optical switches 32A and 32B is switched from the bar state to the cross state, and the WDM light output from the optical coupler 21 is transmitted to the optical branch coupler 41 via the detour optical path 32. As a result, although normal operation of the OADM node cannot be performed, communication with the other nodes on the optical network is maintained. Even when a failure occurs in the WDM optical amplifier 31, the process on the optical supervisory channel light by the OSC processing circuit 53' is performed separately from the process on main signal light, so that occurrence of the failure at the node can be transmitted together with the optical supervisory channel light to a downstream node.

On the other hand, when power supply to the optical add/drop multiplexer is interrupted by blackout or the like, the process on the optical supervisory channel light by the OSC processing circuit 53' cannot be performed and optical supervisory channel information from an upstream node cannot be transmitted to a downstream node. To avoid this situation, in the optical add/drop multiplexer of the embodiment, when failure of power supply occurs, the 2x2 optical switch 53A is switched from the cross state to the bar state, and optical supervisory channel light sent from an upstream node is transmitted as it is to a downstream node. As a result, although the failure of power supply state of the node cannot be transmitted to a downstream node, optical supervisory channel light can be transmitted to another node on the optical network.

According to the optical add/drop multiplexer of the sixth embodiment as described above, even if a failure occurs in the WDM optical amplifier 31 or a power supply failure occurs in a single node, a situation such that the communication of the whole optical network is interrupted can be avoided, and communication with other nodes can be maintained.

In the sixth embodiment, an example of disposing the 1x2 optical switches 32A and 32B at the former stage and post stage of the WDM optical amplifier 31 has been described. However, the layout of the 1×2 optical switches 32A and 32B is not limited to the example. For example, as shown in FIG. 13, it is also possible to dispose the 1 x2 optical switch 32A between the demultiplexer 52 for OSC and the wavelength blocker 11 and dispose the 1×2 optical switch 32B between the optical branch coupler 41 and the multiplexer 54 for OSC. With the configuration of FIG. 13, a loss which occurs in signal light passing through the node when the WDM optical amplifier fails can be minimized.

In the sixth embodiment, the case where the detour circuit 32 and the like are provided for the configuration of the first embodiment has been described. The case can be similarly applied to the configurations of the second to fifth embodiments.

A seventh embodiment of the invention will now be described. A preferred embodiment of the case of making wavelength dispersion compensation in an optical add/drop multiplexer will be shown.

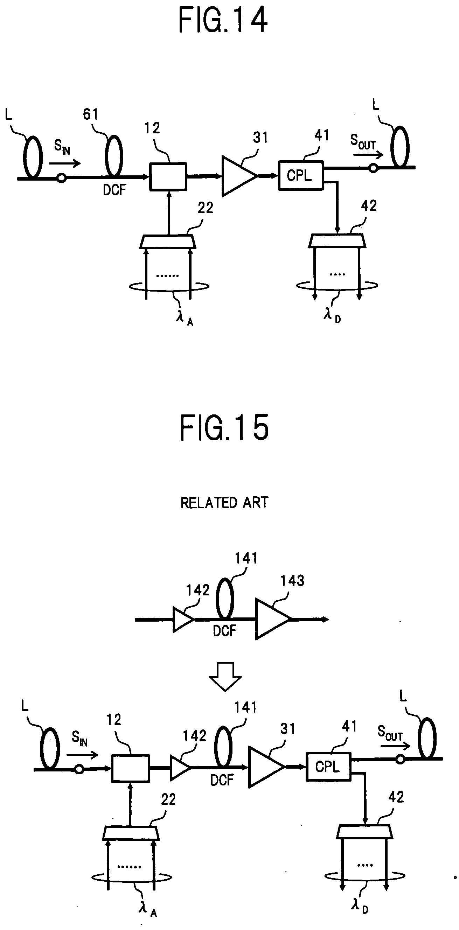

FIG. 14 is a block diagram showing the configuration of an optical add/drop multiplexer according to the seventh embodiment of the invention.

In FIG. 14, in the optical add/drop multiplexer, for example, in the configuration of the second embodiment (FIG. 5), a dispersion compensating fiber (DCF) 61 is inserted as a dispersion compensating unit between an input port to which WDM light S_{IN} propagating through the transmission line L is input and the rejection add filter 12 to compensate wavelength dispersion in the WDM light S_{IN}. The dispersion compensating fiber 61 is a known optical fiber having a wavelength dispersion characteristic opposite to the wavelength dispersion characteristic of the transmission line L. Although an example of making wavelength dispersion compensation by using the dispersion compensating fiber is described here, the dispersion compensating part of the invention is not limited to the dispersion compensating fiber but a known wavelength dispersion compensating device can be used. The compensation amount of the wavelength dispersion in the dispersion compensating part may be either fixed or variable.

Generally, in the case of making wavelength dispersion compensation in a node on an optical network, for example, as shown in the upper part of FIG. 15, a configuration in which a dispersion compensating fiber (DCF) 141 is sandwiched by two optical amplifiers 142 and 143 is known. In the configuration, control is performed in the DCF 141 so that optical output of the optical amplifier 142 at the former stage is suppressed to the degree that a characteristic deterioration due to a nonlinear effect does not occur, and the light output level of the optical amplifier 143 at the post stage is set to be high to increase the transmission distance. In the case of applying the conventional configuration to the second embodiment of the invention, as shown in the lower part of FIG. 15, the optical amplifier 142 and the dispersion compensating fiber 141 are provided between the rejection add filter 12 and the WDM optical amplifier 31.

However, the optical add/drop multiplexer in which the conventional configuration for wavelength dispersion compensation is combined has a drawback of high cost because two optical amplifiers are necessary. Since the wavelength dispersion value of light passing through the rejection add filter 12 and that of add light multiplexed to the through light by the rejection add filter 12 are basically largely different from each other, there is also a problem such that the wavelength dispersion compensation for the through light and the add light cannot be simultaneously performed by the common dispersion compensating fiber 141.

Consequently, in the seventh embodiment, the position of the wavelength dispersion compensation is not set on the optical path between the rejection add filter 12 and the optical branch coupler 41 but a configuration of disposing the dispersion compensating fiber 61 at the former stage of the rejection add filter 12, that is, on the optical path before the add part is employed. In such a configuration, the optical amplifier 142 at the former stage of the dispersion compensating fiber can be omitted. Thus, increase in the cost can be suppressed. In addition, since the wavelength dispersion compensation is made at the stage before add light is multiplexed onto through light, even when the wavelength dispersion value of the through light before compensation and that of add light are largely different from each other, the wavelength dispersion compensation can be made only to the through light and the wavelength dispersion value of compensated through light and that of add light can be adjusted.

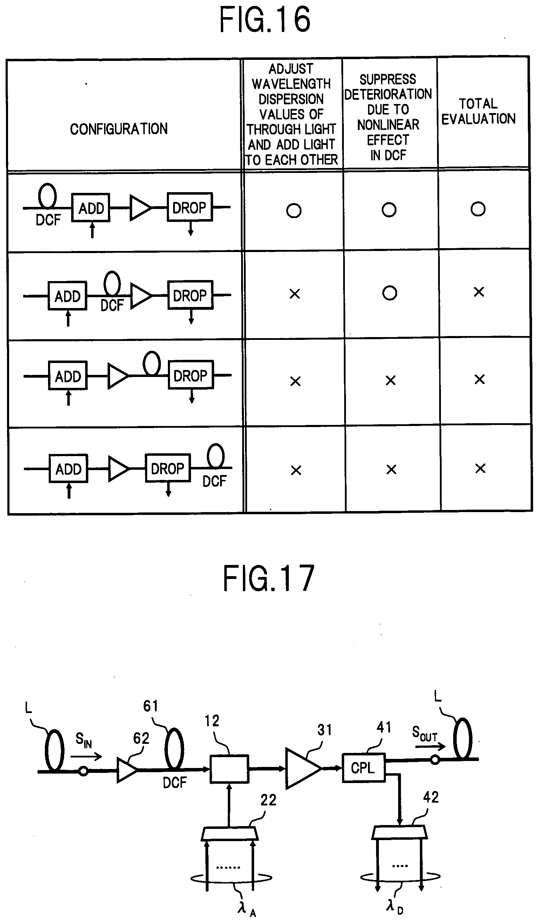

FIG. 16 shows the result of comparison when the wavelength dispersion compensation is made at different positions in the configuration of the invention. The comparison is made to see whether or not the wavelength dispersion value of through light and that of add light can be adjusted and deterioration caused by the nonlinearity effect in the dispersion compensating fiber can be suppressed or not in each of the positions of the dispersion compensating fiber in the add part, the amplifying part, and the drop part.

As described above, in the case where the dispersion compensating fiber is disposed at the former stage of the add part (the first row in FIG. 16), the wavelength dispersion value of through light and that of add light can be adjusted to each other, and deterioration caused by the nonlinearity effect in the dispersion compensating fiber can be suppressed. When the dispersion compensating fiber is disposed between the add part and the amplifying part (the second row in FIG. 16), although deterioration caused by the nonlinearity effect in the dispersion compensation fiber can be suppressed, the wavelength dispersion value of through light and that of add light cannot be adjusted to each other. In the case where the dispersion compensating fiber is disposed between the amplifying part and the drop part or at the post stage of the drop part (the third and fourth rows in FIG. 16), it is difficult to adjust the wavelength dispersion value of through light and that of add light to each other and also to suppress deterioration caused by the nonlinearity effect in the dispersion compensating fiber.

Although the configuration example in which the optical amplifier at the former stage of the dispersion compensating fiber is omitted is shown in the foregoing seventh embodiment, for example, as shown in FIG. 17, an optical amplifier 62 having gain which is low to the degree that the insertion loss of the dispersion compensating fiber 61 is compensated may be provided at the former stage of the dispersion compensating fiber 61. In this case, although the cost increases due to the optical amplifier 62, an effect of adjusting the wavelength dispersion values of through light and add light to each other can be obtained.

Although the configuration example corresponding to the wavelength dispersion compensation of the second embodiment has been described in the seventh embodiment, a configuration similar to the above can be also applied to the other embodiments.

An eighth embodiment of the invention will now be described. As the eighth embodiment, a modification of constructing the add part and the drop part by using a wavelength selective switch (WSS) will be described.

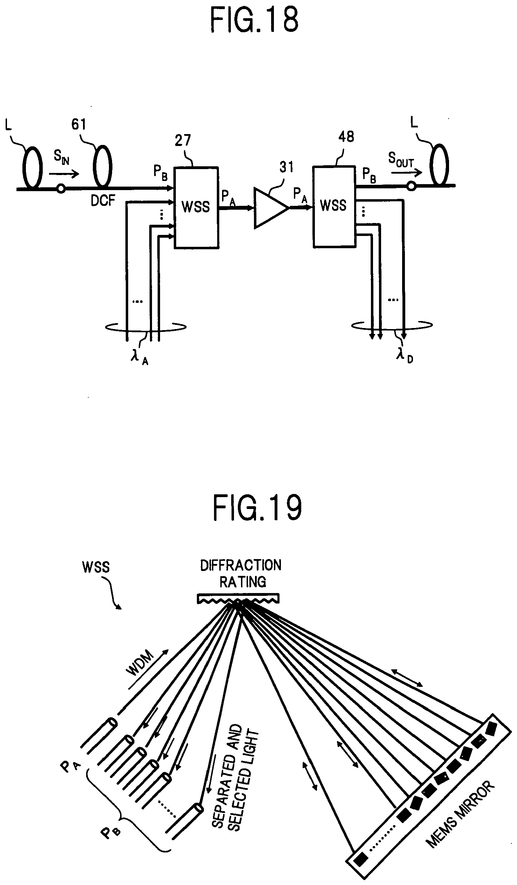

FIG. 18 is a block diagram showing a configuration of an optical add/drop multiplexer according to the eighth embodiment of the invention.

In FIG. 18, the optical add/drop multiplexer of the eighth embodiment has, for example, in the configuration of the seventh embodiment (FIG. 14), a wavelength selective switch 27 is provided in place of the rejection add filter 12 and the WDM coupler 22 and a wavelength selective switch 48 is provided in place of the optical branch coupler 41 and the optical filter circuit 42.

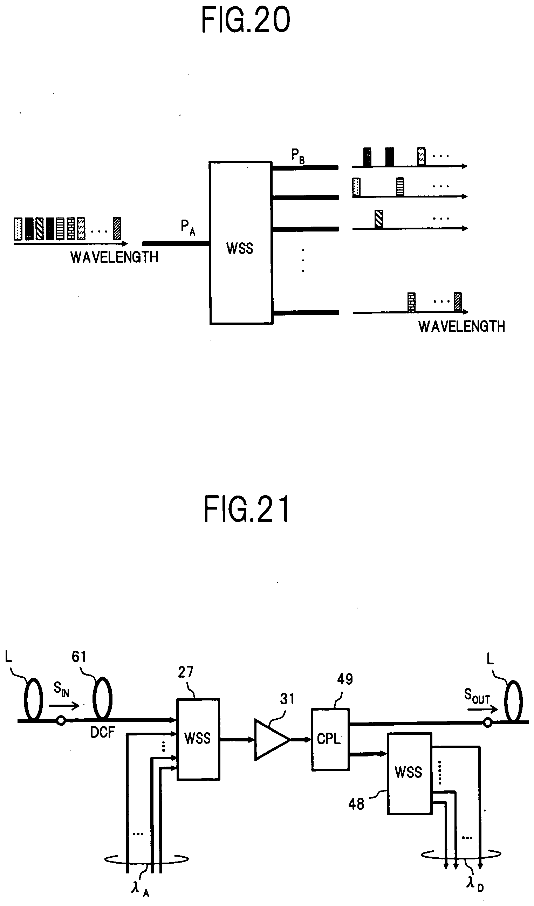

Each of the wavelength selective switches 27 and 48 is a known optical switch having, for example, as shown in FIG. 19, one input/output port P_{A}, a plurality of input/output ports P_{B}, and an optical system including a diffraction grating and an MEMS mirror, capable of selecting an arbitrary wavelength from the WDM light supplied to the input/output port P_{A,} outputting the selected wavelength to an arbitrary input/output port P_{B} and, when the same wavelength is input in the opposite direction to each of the input/output ports P_{B}, returning the wavelength to the input/output port P_{A}. FIG. 20 schematically shows the characteristics of the wavelength selective switch.

In the configuration example of FIG. 18, WDM light passing through the dispersion compensating fiber 61 is input to one of the plurality of input/output ports P_{B} of the wavelength selective switch 27, add light is input to the remaining input/output ports P_{B} of the wavelength selective switch 27, and WDM light output from the single input/output port P_{A} of the wavelength selective switch 27 is supplied to the WDM optical amplifier 31. The output light of the WDM optical amplifier 31 is input to the single input/output port P_{A} of the wavelength selective switch 48, through light is output from one of the plurality of input/output ports P_{B} of the wavelength selective switch 48, and drop light is output from the remaining input/output ports P_{B}.

In the optical add/drop multiplexer with the configuration, the WDM light S_{IN} supplied to the input port of the multiplexer via the transmission line L is sent to the dispersion compensating fiber 61, and the WDM light passed through the dispersion compensating fiber 61 is input to one of the plurality of input/output ports P_{B} of the wavelength selective switch 27. In the wavelength selective switch 27, by controlling the angle of the MEMS mirror, signal light having a wavelength different from the wavelength of add light input to another input/output port P_{B} in the input WDM light is supplied to the input/output port P_{A} as through light, the add light input to another input/output port P_{B} is supplied to the input/output port P_{A}, and the WDM light obtained by multiplexing the through light and the add light is output to the WDM optical amplifier 31. In this case, the wavelength selective switch 27 has the functions of the blocking part and the add part.

The WDM light amplified by the WDM optical amplifier 31 is input to the input/output port P_{A} of the wavelength selective switch 48. In the wavelength selective switch 48, by controlling the angle of the MEMS mirror, signal light having a wavelength other than the wavelength λ_{D} included in input light is sent to the input/output port P_{B} connected to the transmission line L, and the signal light having the wavelength λ_{D} is output from the input/output port P_{B} corresponding to the drop light.

In the configuration example shown in FIG. 18, all of signal light having the wavelength λ_{D} is dropped in the wavelength selective switch 48. Consequently, it is difficult to perform so-called multicast transmission of simultaneously dropping signal light having the same wavelength at a specific site among a plurality of sites existing on an optical network and so-called broadcast transmission of simultaneously dropping signal light having the same wavelength in all of the sites. To perform the multicast transmission and broadcast transmission, for example, as shown in FIG. 21, it is sufficient to apply a configuration such that an optical branch coupler 49 is provided between the WDM optical amplifier 31 and the wavelength selective switch 48, WDM light output from the WDM optical amplifier 31 is split into two WDM lights by the optical branch coupler 49, one of the WDM light is supplied to the input/output port P_{A} of the wavelength selective switch 48, and the other WDM light is output as it is to the transmission line L.

According to the eighth embodiment as described above, also by constructing the optical add/drop multiplexer by using the wavelength selective switch, operations and effects similar to those of the seventh embodiment can be obtained and a smaller and cheaper optical add/drop multiplexer can be realized. By constructing the optical add/drop multiplexer by using the wavelength selective switch, for example, in the case of adding a ring network, it is unnecessary to newly prepare a wavelength selective switch. Therefore, an effect such that increase in the cost at the time of addition can be suppressed is also obtained.

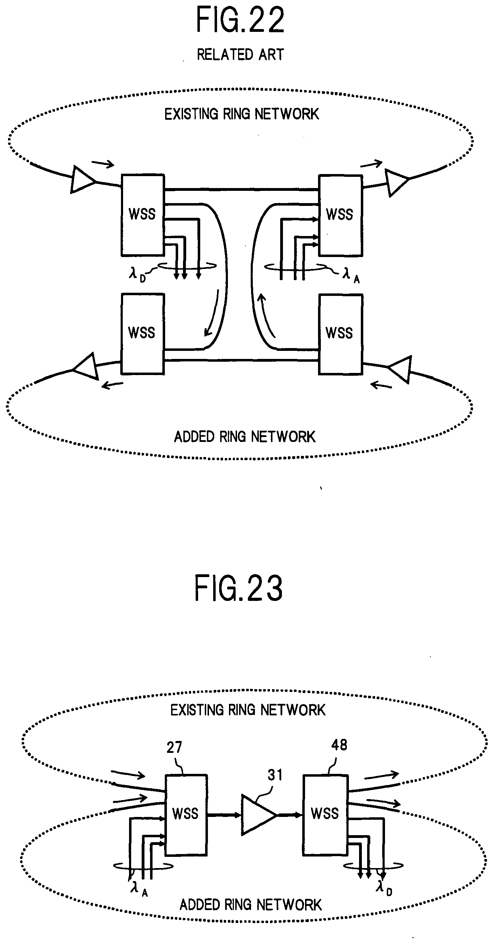

Concrete effects at the time of adding the ring network will be described. In the optical add/drop multiplexer using the wavelength selective switch, arbitrary signal light included in the WDM light transmitted onto the ring network can be selectively output to a desired input/output port of the wavelength selective switch 48, so that a ring network can be added by using an input/output port of the wavelength selective switch 48. In the case of applying the wavelength selective switch to the conventional configuration in which the add part is disposed at the post stage of the drop part as shown in FIG. 26 and the like, to add a ring network, for example, as shown in FIG. 22, it is necessary to connect a pair of wavelength selective switches separately prepared to the drop light output port of the wavelength selective switch at the former stage and the add light input port of the wavelength selective switch at the post stage. In this case, the number of parts increases in association with addition of the ring network, so that increase in the cost of the optical add/drop multiplexer cannot be avoided. Even if an added ring network is connected without separately providing a pair of wavelength selective switches, a closed network cannot be constructed only by the added ring network.

On the other hand, if the wavelength selective switch is applied to the configuration of the present invention in which the drop part is disposed at the post stage of the add part, for example, as shown in FIG. 23, one of add light input ports of the wavelength selective switch 27 at the former stage and one of drop light output ports of the wavelength selective switch 48 at the post stage can be used as input/output ports for the added ring network. Consequently, without separately providing a pair of wavelength selective switches as shown in FIG. 22, a closed network can be constructed only by using an added ring network.

Although the configuration example of using the wavelength selective switches for the seventh embodiment has been described in the eighth embodiment, similarly, by using wavelength selective switches for the first to sixth embodiments, the add part, drop part, and blocking part can be constructed.

## Claims

1. An optical add/drop multiplexer connected to a transmission line (L) in which wavelength division multiplexed light including a plurality of signal lights having different wavelengths propagates, capable of adding or dropping signal light having at least one wavelength to/from the wavelength division multiplexed light supplied from the transmission line (L), and outputting the resultant wavelength division multiplexed light to said transmission line, comprising:
a blocking part (1, 11, 11') for blocking light having wavelength corresponding to the wavelength of the signal light to be added in said optical add/drop multiplexer out of a plurality of signal lights included in the wavelength division multiplexed light supplied from said transmission line (L);
an add part (2, 21, 12, 21', 27) for multiplexing signal light with the light output from said blocking part and outputting the resultant light;
an in-line amplifying part (3, 31) for amplifying the wavelength division multiplexed light, in which the wavelength of the signal light to be added and the wavelengths not being blocked by the blocking part are wavelength-division-multiplexed, output from said add part and outputting the amplified light; and
a drop part (4, 41, 41', 48, 49) for branching the wavelength division multiplexed light output from said amplifying part into two lights, the drop part being able to extract signal light having wavelength different from the wavelength of signal light multiplexed by said add part from one of the branched light, and outputting the other branched light to said transmission line (L).

2. The optical add/drop multiplexer according to claim 1, wherein said blocking part comprises a wavelength blocker (11, 11') having a block wavelength band including the wavelength of the signal light to be multiplexed by said add part,
said add part comprises an optical coupler (21, 21') having two input ports and one output port, multiplexing signal light passed through said wavelength blocker supplied to one of the input ports and signal light having the same wavelength as that of signal light blocked by said blocking part and supplied to the other input port, and outputting the multiplexed signal light from the output port; and
said drop part includes an optical branch coupler (41, 41') having one input port and two output ports, receiving the wavelength division multiplexed light output from said amplifying part by the input port, branching the input light into two lights, and outputting the lights from the output ports, and an optical filter circuit for extracting signal light having at least one wavelength different from that of signal light multiplexed by said add part from the wavelength division multiplexed light output from one of the output ports of the optical branch coupler.

3. The optical add/drop multiplexer according to claim 2, wherein a rejection add filter (12) is used as said wavelength blocker and said optical coupler.

4. The optical add/drop multiplexer according to claim 2, wherein said drop part has a control circuit (51) which can change a branching ratio of said optical branch coupler and controls the branching ratio of said optical branch coupler on the basis of the wavelength of signal light extracted by said optical filter circuit.

5. The optical add/drop multiplexer according to claim 2, wherein said add part has a variable optical attenuator (24) inserted on an optical path connected to at least one of the input ports of said optical coupler (21), and a control circuit (51) for controlling an attenuation amount of said variable optical attenuator so that signal light powers of the different wavelengths output from the output ports of said optical coupler become the same.

6. The optical add/drop multiplexer according to claim 2, wherein said add part has a control circuit (51) which can change a multiplexing ratio of power of light input to each of the input ports of said optical coupler and controls said multiplexing ratio so that the signal light powers of different wavelengths output from the output ports of the optical coupler become equal to each other.

7. The optical add/drop multiplexer according to claim 1, further comprising:
two optical switches (32A, 32B) provided on an optical path connected to an input terminal and an optical path connected to an output terminal of said amplifying part (31);
a detour circuit (32) for directly connecting the optical switches; and
a switch control circuit (53') for controlling each of said optical switches so that wavelength division multiplexed light passes through said amplifying part when said amplifying part operates normally, and passes through said detour circuit when a failure occurs in said amplifying part.

8. The optical add/drop multiplexer according to claim 7, wherein one of said two optical switches (32A, 32B) is provided on an optical path at the former stage of said blocking part and the other optical switch is provided on an optical path at the post stage of said drop part.

9. The optical add/drop multiplexer according to claim 1, further comprising a supervisory control light processing circuit for receiving supervisory control light supplied from said transmission line (L), obtaining wavelength information of signal light, generating supervisory control light, and transmitting the generated supervisory control light to said transmission line,
wherein the supervisory control light processing circuit has the function of outputting supervisory control light input from said transmission line as it is to said transmission line at the time of power supply failure.

10. An optical add/drop multiplexer connected to a transmission line (L) in which wavelength division multiplexed light including a plurality of signal lights having different wavelengths propagates, capable of adding or dropping signal light having at least one wavelength to/from the wavelength division multiplexed light supplied from the transmission line (L), and outputting the resultant wavelength division multiplexed light to said transmission line, comprising:
an add part (2, 21, 12, 21', 27) for multiplexing signal light having at least one wavelength with wavelength division multiplexed light input from said transmission line and outputting the resultant light;
an in-line amplifying part (3, 31) for amplifying the wavelength division multiplexed light, in which said at least one wavelength is wavelength-division-multiplexed with the wavelength division multiplexed light input from said transmission line, output from said add part and outputting the amplified light;
a drop part (4, 41, 41', 48, 49) for branching the wavelength division multiplexed light output from said amplifying part into two lights, the drop part being able to extract signal light having wavelength different from the wavelength of signal light multiplexed by said add part from one of the branched light; and
a blocking part (1', 13, 13') for blocking signal light having the same wavelength as that of the signal light extracted by said drop part out of a plurality of signal lights included in the other branched light supplied from said drop part and outputting the resultant light to said transmission line.

11. The optical add/drop multiplexer according to claim 10, wherein said add part comprises an optical coupler (21, 21') having two input ports and one output port, multiplexing the wavelength division multiplexed light from said transmission line, which is supplied to one of the input ports and signal light having at least one wavelength supplied to the other input port, and outputting the multiplexed signal light from the output port,
said drop part includes: an optical branch coupler (41, 41') having one input port and two output ports, receiving the wavelength division multiplexed light output from said amplifying part by the input port, branching the input light into two lights , and outputting the lights from the output ports; and an optical filter circuit for extracting signal light having at least one wavelength different from that of the signal light multiplexed by said add part from the wavelength division multiplexed light output from one of the output ports of the optical branch coupler, and
said blocking part includes a wavelength blocker (13, 13') having a block wavelength band including the wavelength of the signal light to be extracted by said optical filter circuit.

12. The optical add/drop multiplexer according to claim 11, wherein said drop part has a control circuit (51) which can change a branching ratio of said optical branch coupler and controls the branching ratio of said optical branch coupler on the basis of the wavelength of signal light extracted by said optical filter circuit.

13. The optical add/drop multiplexer according to claim 11, wherein said add part has a variable optical attenuator inserted on an optical path connected to at least one of the input ports of said optical coupler, and a control circuit (51) for controlling an attenuation amount of said variable optical attenuator so that signal light powers of the different wavelengths output from the output ports of said optical coupler become the same.

14. The optical add/drop multiplexer according to claim 11, wherein said add part has a control circuit (51) which can change a multiplexing ratio of power of light input to each of the input ports of said optical coupler and controls said multiplexing ratio so that the signal light powers of different wavelengths output from the output ports of the optical coupler become equal to each other.

15. The optical add/drop multiplexer according to claim 10, further comprising:
two optical switches (32A, 32B) provided on an optical path connected to an input terminal and an optical path connected to an output terminal of said amplifying part;
a detour circuit (32) for directly connecting the optical switches; and
a switch control circuit for controlling each of said optical switches so that wavelength division multiplexed light passes through said amplifying part when said amplifying part operates normally, and passes through said detour circuit when a failure occurs in said amplifying part.

16. The optical add/drop multiplexer according to claim 15, wherein one of said two optical switches (32A, 32B) is provided on an optical path at the former stage of said add part and the other optical switch is provided on an optical path at the post-stage of said blocking part.

17. The optical add/drop multiplexer according to claim 10, further comprising a supervisory control light processing circuit for receiving supervisory control light supplied from said transmission line (L), obtaining wavelength information of signal light, generating supervisory control light, and transmitting the generated supervisory control light to said transmission line,
wherein the supervisory control light processing circuit has the function of outputting supervisory control light input from said transmission line as it is to said transmission line at the time of power supply failure.

18. The optical add/drop multiplexer according to claim 1, wherein a dispersion compensating part (61) having a wavelength dispersion characteristic opposite to the wavelength dispersion characteristic of said transmission line is provided on the optical path at the former stage of said add part.

19. The optical add/drop multiplexer according to claim 18, wherein an optical amplifier (62) for compensating an insertion loss of said dispersion compensating part is provided at the former stage of said dispersion compensating part.

20. The optical add/drop multiplexer according to claim 18, wherein said dispersion compensating part (61) is constructed by using a dispersion compensating fiber.

21. The optical add/drop multiplexer according to claim 18, wherein a wavelength dispersion compensation amount of said dispersion compensating part (61) is variable.

22. The optical add/drop multiplexer according to claim 1, wherein each of said blocking part and said add part is constructed by using a first wavelength selective switch (27) having a plurality of input ports and one output port, and
said drop part has a second wavelength selective switch (48) having one input port and a plurality of output ports.

23. The optical add/drop multiplexer according to claim 22, wherein said first wavelength selective switch (27) receives wavelength division multiplexed light from said transmission line by one of the plurality of input ports, receives add light to the other input ports, multiplexes signal light having wavelengths different from the wavelength of said add light in the signal light having wavelengths included in said wavelength division multiplexed light to said add light, and outputs the multiplexed light from the output port.

24. The optical add/drop multiplexer according to claim 22, wherein said second wavelength selective switch (48) receives wavelength division multiplexed light which is output from said amplifying part by the input port, extracts signal light having at least one wavelength different from the wavelength of signal light multiplexed by said add part from said wavelength division multiplexed light, outputs the extracted signal light from a corresponding output port, and outputs the other signal light from the output port connected to said transmission line.

25. The optical add/drop multiplexer according to claim 22, wherein said drop part has an optical branch coupler for branching wavelength division multiplexed light output from said amplifying part into two lights, supplies one of the two lights output from the optical branch coupler to the input port of said second wavelength selective switch, and outputs the other light to said transmission line (L).

26. The optical add/drop multiplexer according to claim 10, wherein a dispersion compensating part (61) having a wavelength dispersion characteristic opposite to the wavelength dispersion characteristic of said transmission line is provided on the optical path at the former stage of said add part.

27. The optical add/drop multiplexer according to claim 26, wherein an optical amplifier (62) for compensating an insertion loss of said dispersion compensating part is provided at the former stage of said dispersion compensating part.

28. The optical add/drop multiplexer according to claim 26, wherein said dispersion compensating part (61) is constructed by using a dispersion compensating fiber.

29. The optical add/drop multiplexer according to claim 26, wherein a wavelength dispersion compensation amount of said dispersion compensating part (61) is variable.

30. The optical add/drop multiplexer according to claim 10, wherein said add part is constructed by using a first wavelength selective switch (27) having a plurality of input ports and one output port, and
each of said drop part and said blocking part has a second wavelength selective switch having one input port and a plurality of output ports.

31. The optical add/drop multiplexer according to claim 30, wherein said first wavelength selective switch (27) receives wavelength division multiplexed light input from said transmission line by one of the plurality of input ports, receives add light by the other input ports, multiplexes said wavelength division multiplexed light and said add light, and outputs the multiplexed light from the output port.

32. The optical add/drop multiplexer according to claim 30, wherein said second wavelength selective switch (48) receives wavelength division multiplexed light output from said amplifying part by the input port, extracts signal light having at least one wavelength different from that of signal light multiplexed by said add part from said wavelength division multiplexed light, outputs the extracted signal light from a corresponding output port, and outputs the other light from the output port connected to said transmission line.

## Patentansprüche

1. Optischer Add/Drop-Multiplexer verbunden mit einer Übertragungsleitung (L), in der sich wellenlängen-gemultiplextes Licht, das eine Mehrzahl von Lichtsignalen mit verschiedenen Wellenlängen hat, ausbreitet, und der in der Lage ist, Signallicht, das mindestens eine Wellenlänge hat, hinzuzufügen zu oder zu entfernen von dem wellenlängen-gemultiplexten Licht, das aus der Übertragungsleitung (L) bereitgestellt wird, und der das resultierende wellenlängen-gemultiplexte Licht in die Übertragungsleitung (L) ausgibt, umfassend:
einen Sperrteil (1, 11, 11') zur Sperrung von Licht, das eine Wellenlänge hat, die einer Wellenlänge des Signallichts entspricht, das in den optischen Add/Drop-Multiplexer aus einer Mehrzahl von Lichtsignalen hinzugefügt werden soll, die in dem wellenlängen-gemultiplexten Licht enthalten sind, das aus der Übertragungsleitung (L) bereitgestellt wird;
einen Hinzufügungsteil (2, 21, 12, 21', 27) zur Multiplexierung von Signallicht mit dem aus dem Sperrteil ausgegebenen Licht und zum Ausgeben des resultierenden Lichts;
einen Inline-Verstärkungsteil (3, 31) zur Verstärkung des wellenlängen-gemultiplexten Lichts, in dem die Wellenlänge des Signallichts, das hinzugefügt werden soll, und die Wellenlängen, die nicht durch das Sperrteil gesperrt sind, wellenlängen-gemultiplext werden, ausgegeben aus dem Hinzufügungsteil und zum Ausgeben des verstärkten Lichts; und
einen Entfernungsteil (4, 41, 41', 48, 49) zur Verzweigung des aus dem Verstärkungsteil ausgegebenen wellenlängen-gemultiplexten Lichts in zwei Lichter, wobei der Entfernungsteil in der Lage ist, Signallicht zu extrahieren, das eine Wellenlänge hat, die verschieden von der Wellenlänge des Signallichts ist, das mittels des Hinzufügungsteils gemultiplext wurde, aus einem der verzweigten Lichter, und zum Ausgeben des anderen verzweigten Lichts in die Übertragungsleitung (L).

2. Optischer Add/Drop-Multiplexer nach Anspruch 1, wobei der Sperrteil einen Wellenlängenblocker (11, 11') umfasst, der ein Blockwellenlängenband hat, das die Wellenlänge des Signallichts einschließt, die mittels des Hinzufügungsteils gemultiplext werden soll,
wobei der Hinzufügungsteil einen Optokoppler (21, 21') umfasst, der zwei Eingangsports und einen Ausgangsport hat, der Signallicht, das den Wellenlängenblocker durchlaufen hat und einem der Eingangsports zugeführt wurde, und Signallicht, das dieselbe Wellenlänge hat wie das Signallicht, das mittels des Sperrteils gesperrt wird und dem anderen Eingangsport zugeführt wurde, multiplext, und der das gemultiplexte Signallicht aus dem Ausgangsport ausgibt; und
wobei der Entfernungsteil einen optischen Zweigkoppler (41, 41') einschließt, der einen Eingangsport und zwei Ausgangsports hat, und der das aus dem Verstärkungsteil ausgegebene wellenlängen-gemultiplexte Licht mittels des Eingangsports erhält, und der das Eingangslicht in zwei Lichter verzweigt, und der die Lichter aus den Ausgangsports ausgibt, und der einen optischen Filterkreis zur Extrahierung von Signallicht einschließt, das mindestens eine Wellenlänge hat, die verschieden von dem Signallicht ist, das mittels des Hinzufügungsteils gemultiplext wurde, aus dem von einem der Ausgangsports des optischen Zweigkopplers ausgegebenen wellenlängen-gemultiplexten Licht.

3. Optischer Add/Drop-Multiplexer nach Anspruch 2, wobei ein Bandsperrhinzufügungsfilter (12) als Wellenlängenblocker und als Optokoppler verwendet wird.

4. Optischer Add/Drop-Multiplexer nach Anspruch 2, wobei der Entfernungsteil einen Steuerkreis (51) hat, der ein Verzweigungsverhältnis des optischen Zweigkopplers ändern kann und der das Verzweigungsverhältnis des optischen Zweigkopplers steuert auf Grundlage der Wellenlänge des Signallichts, das durch den optischen Filterkreis extrahiert wurde.

5. Optischer Add/Drop-Multiplexer nach Anspruch 2, wobei der Hinzufügungsteil einen variablen optischen Abschwächer (24), der auf einem Strahlengang verbunden mit mindestens einem der Eingangsports des Optokopplers (21) eingefügt ist, und einen Steuerkreis (51) zur Steuerung eines Abschwächungsbetrages des variablen optischen Abschwächers hat, so dass Signallichtleistungen der verschiedenen Wellenlängen ausgegeben aus den Ausgangsports des Optokopplers dieselben werden.

6. Optischer Add/Drop-Multiplexer nach Anspruch 2, wobei der Hinzufügungsteil einen Steuerkreis (51) hat, der ein Mutliplexverhältnis der Leistungen des Lichts, das in jeden der Eingangsports des Optokopplers eingegeben wird, verändern kann, und der das Multiplexverhältnis steuert, so dass die Leistungen des Signallichts mit verschiedenen Wellenlängen, das aus den Ausgangsports der Optokopplers ausgegeben wird, dieselben werden.

7. Optischer Add/Drop-Multiplexer nach Anspruch 1, weiterhin umfassend:
zwei optische Schalter (32A, 32B) bereitgestellt auf einem Strahlengang verbunden mit einem Eingangsterminal und einem Strahlengang verbunden mit einem Ausgangsterminal des Verstärkungsteils (31);
einen Umleitungskreis (32) zur direkten Verbindung der optischen Schalter; und
einen Schaltersteuerkreis (53') zur Steuerung eines jeden der optischen Schalter, so dass wellenlängen-gemultiplextes Licht den Verstärkungsteil durchläuft, wenn der Verstärkungsteil normal arbeitet, und den Umleitungskreis durchläuft, wenn ein Fehler in dem Verstärkungsteil auftritt.

8. Optischer Add/Drop-Multiplexer nach Anspruch 7, wobei einer der beiden optischen Schalter (32A, 32B) in einem Strahlengang vor der Stelle des Sperrteils bereitgestellt ist und der andere optische Schalter in einem Strahlengang nach der Stelle des Entfernungsteils bereitgestellt ist.

9. Optischer Add/Drop-Multiplexer nach Anspruch 1, weiterhin umfassend einen Überwachungssteuerlichtverarbeitungskreis zum Empfangen von Überwachungssteuerlicht bereitgestellt aus der Übertragungsleitung (L), zum Beziehen von Wellenlängeninformationen des Signallichts , zum Erzeugen von Überwachungssteuerlicht, und zum Übertragen des Überwachungssteuerlichts zur Übertragungsleitung,
wobei der Überwachungssteuerlichtverarbeitungskreis die Funktion hat, Überwachungssteuerlicht, eingegeben aus der Übertragungsleitung, wie es ist an die Übertragungsleitung zum Zeitpunkt eines Stromausfalls auszugeben.

10. Optischer Add/Drop-Multiplexer verbunden mit einer Übertragungsleitung (L), in der sich wellenlängen-gemultiplextes Licht, das eine Mehrzahl von Lichtsignalen einschließt, die unterschiedliche Wellenlängen haben, ausbreitet, und der in der Lage ist, Signallicht, das mindestens eine Wellenlänge hat, hinzuzufügen zu oder zu entfernen von dem wellenlängen-gemultiplexten Licht, das aus der Übertragungsleitung (L) bereitgestellt wird, und der das resultierende wellenlängen-gemultiplexte Licht in die Übertragungsleitung ausgibt, umfassend:
einen Hinzufügungsteil (2, 21, 12, 21', 27) zur Multiplexierung von Signallicht, das mindestens eine Wellenlänge hat, mit aus der Übertragungsleitung eingegebenen wellenlängen-gemultiplexten Licht und zur Ausgabe des resultierenden Lichts;
einen Inline-Verstärkungsteil (3, 31) zur Verstärkung des wellenlängen-gemultiplexten Lichts, in dem die mindestens eine Wellenlänge wellenlängen-gemultiplext ist, mit dem aus der Übertragungsleitung eingegebenen wellenlängen-gemultiplexten Licht, ausgegeben aus dem Hinzufügungsteil und zur Ausgeben des verstärkten Lichts;
einen Entfernungsteil (4, 41, 41' 48, 49) zur Verzweigung des aus dem Verstärkungsteil ausgegebenen wellenlängen-gemultiplexten Lichts in zwei Lichter, wobei der Entfernungsteil in der Lage ist, Signallicht zu extrahieren, das eine Wellenlänge hat, die verschieden ist von der Wellenlänge des Signallichts, das mittels des Hinzufügungsteils gemultiplext wurde, aus einem der verzweigten Lichter; und
einen Sperrteil (1', 13, 13') zur Sperrung von Signallicht, das dieselbe Wellenlänge hat, wie das Signallicht, das mittels des Entfernungsteils aus einer Mehrzahl von Signallichtern, eingeschlossen in dem anderen verzweigten Licht bereitgestellt aus dem Entfernungsteil, extrahiert wurde und zur Ausgabe des resultierenden Lichts in die Übertragungsleitung.

11. Optischer Add/Drop-Multiplexer nach Anspruch 10, wobei der Hinzufügungsteil einen Optokoppler (21, 21') umfasst, der zwei Eingangsports und einen Ausgangsport hat, der das wellenlängen-gemultiplexte Licht aus der Übertragungsleitung multiplext, das an einem der Eingangsports bereitgestellt wird und Signallicht, das mindestens eine Wellenlänge hat, das an dem anderen Eingangsport bereitgestellt wird, und zur Ausgabe des Signallichts, das gemultiplext wurde, aus dem Ausgangsport,
wobei der Entfernungsteil enthält: einen optischen Zweigkoppler (41, 41'), der einen Eingangsport und zwei Ausgangsports hat, und der das wellenlängen-gemultiplexte Licht ausgebeben aus dem Verstärkungsteil mittels des Eingangsports aufnimmt, und der das Eingangslicht in zwei Lichter verzweigt, und der die Lichter aus den Ausgangsports ausgibt; und einen optischen Filterkreis zur Extrahierung von Signallicht, das mindestens eine Wellenlänge verschieden von der des Signallichts hat, das durch den Hinzufügungsteil gemultiplext wurde, von dem wellenlängen-gemultiplexten Licht ausgegeben aus einem der Ausgangsports des optischen Zweigkopplers, und
wobei das Sperrteil einen Wellenlängenblocker (13, 13') einschließt, der ein Blockwellenlängenband hat, das die Wellenlänge des Signallichts einschließt, das mittels des optischen Filterkreises extrahiert werden soll.

12. Optischer Add/Drop-Multiplexer nach Anspruch 11, wobei der Entfernungsteil einen Steuerkreis (51) hat, der ein Verzweigungsverhältnis des optischen Zweigkopplers verändern kann und der das Verzweigungsverhältnis des optischen Zweigkopplers auf Grundlage der Wellenlänge des Signallichts, extrahiert mittels des optischen Filterkreises, steuert.

13. Optischer Add/Drop-Multiplexer nach Anspruch 11, wobei der Hinzufügungsteil einen variablen optischen Abschwächer, der in einen Strahlengang eingefügt ist, der mit mindestens einem der Eingangsports des Optokopplers verbunden ist, und einen Steuerkreis (51) zur Steuerung eines Abschwächungsbetrages des variablen optischen Abschwächers hat, so dass Signallichtleistungen von verschiedenen Wellenlängen, ausgegeben aus den Ausgangsports des Optokopplers, dieselben werden.

14. Optischer Add/Drop-Multiplexer nach Anspruch 11, wobei der Hinzufügungsteil einen Steuerkreis (51) hat, der ein Multiplexverhältnis der Leistung des Licht, eingegeben in jeden der Eingangsports des Optokopplers, verändern kann und der das Multiplexverhältnis so steuert, dass die Signallichtleistungen von verschiedenen Wellenlängen, ausgegeben aus den Ausgangsports des Optokopplers, dieselben werden.

15. Optischer Add/Drop-Multiplexer nach Anspruch 10, weiterhin umfassend:
zwei optische Schalter (32A, 32B) bereitgestellt in einem Strahlengang verbunden mit einem Eingangsterminal und einem Strahlengang verbunden mit einem Ausgangsterminal des Verstärkungsteils;
ein Umleitungskreis (32) zur direkten Verbindung der optischen Schalter; und
ein Schaltersteuerkreis zu Steuerung jedes der optischen Schalter, so dass wellenlängen-gemultiplextes Licht den Verstärkungsteil durchläuft, wenn der Verstärkungsteil normal arbeitet, und den Umleitungskreis durchläuft, wenn ein Fehler in dem Verstärkungsteil auftritt.

16. Optischer Add/Drop-Multiplexer nach Anspruch 15, wobei einer der zwei optischen Schalter (32A, 32B) in einem Strahlengang vor der Stelle des Hinzufügungsteils bereitgestellt ist und der andere optische Schalter in einem Strahlengang nach der Stelle des Sperrteils bereitgestellt ist.

17. Optischer Add/Drop-Multiplexer nach Anspruch 10, weiterhin umfassend einen Überwachungssteuerlichtverarbeitungskreis zur Aufnahme von Überwachungssteuerlicht bereitgestellt aus der Übertragungsleitung (L), zur Erlangung von Wellenlängeninformationen des Signallichts, zur Erzeugung von Überwachungssteuerlicht, und zur Übermittlung des erzeugten Überwachungssteuerlichts an die Übertragungsleitung,
wobei der Überwachungssteuerlichtverarbeitungskreis die Funktion hat, Überwachungssteuerlicht, das aus der Übertragungsleitung eingegeben wurde, wie es ist an die Übertragungsleitung im Zeitpunkt eines Stromausfalls auszugeben.

18. Optischer Add/Drop-Multiplexer nach Anspruch 1, wobei ein Dispersionskompensationsteil (61), das eine Wellenlängendispersionscharakteristik hat, die entgegengesetzt zur Wellenlängendispersionscharakteristik der Übertragungsleitung ist, in dem Strahlengang vor dem Hinzufügungsteil bereitgestellt ist.

19. Optischer Add/Drop-Multiplexer nach Anspruch 18, wobei ein optischer Verstärker (62) zur Kompensation einer Einfügungsdämpfung des Dispersionskompensationsteils vor einer Stelle des Dispersionskompensationsteils bereitgestellt ist.

20. Optischer Add/Drop-Multiplexer nach Anspruch 18, wobei das Dispersionskompensationsteil (61) mittels Verwendung einer Dispersionskompensationsfaser gebildet ist.

21. Optischer Add/Drop-Multiplexer nach Anspruch 18, wobei ein Betrag der Wellenlängendispersionskompensation des Dispersionskompensationsteils (61) veränderbar ist.

22. Optischer Add/Drop-Multiplexer nach Anspruch 1, wobei sowohl Sperrteil als auch Hinzufügungsteil konstruiert werden mittels Verwendung eines ersten Wellenlängenauswahlschalters (27), der eine Mehrzahl von Eingangsports und einen Ausgangsport hat, und
der Entfernungsteil hat einen zweiten Wellenlängenauswahlschalter (48), der einen Eingangsport und eine Mehrzahl von Ausgangsports hat.

23. Optischer Add/Drop-Multiplexer nach Anspruch 22, wobei der erste Wellenlängenauswahlschalter (27) wellenlängen-gemultiplexes Licht von der Übertragungsleitung mittels eines der Mehrzahl von Eingangsports erhält, und der Hinzufügungslicht zu den anderen Eingangsports erhält, und der gemultiplextes Signallicht bereitstellt, das Wellenlängen verschieden von der Wellenlänge des Hinzufügungslichts in dem Signallicht hat, das Wellenlängen hat, die in dem wellenlängen-gemultiplexten Licht zu dem Hinzufügungslicht eingeschlossen sind, und der das gemultiplexte Licht aus dem Ausgangsport ausgibt.

24. Optischer Add/Drop-Multiplexer nach Anspruch 22, wobei der zweite Wellenlängenauswahlschalter (48) wellenlängen-gemultiplextes Licht erhält, das mittels des Verstärkungsteils ausgegeben wird, und der Signallicht extrahiert, das mindestens ein Wellenlänge hat, die verschieden von der Wellenlänge des Signallichts ist, das mittels des Hinzufügungsteils multiplex wurde, von dem wellenlängen-gemultiplexten Licht, und der das extrahierte Licht aus einem entsprechenden Ausgangsport ausgibt, und der das andere Signallicht aus dem anderen Ausgangsport, der mit der Übertragungsleitung verbunden ist, ausgibt.

25. Optischer Add/Drop-Multiplexer nach Anspruch 22, wobei der Entfernungsteil einen optischen Zweigkoppler hat zur Verzweigung des wellenlängen-gemultiplexten Lichts ausgegeben aus dem Verstärkungsteil in zwei Lichter, und der eines der zwei Lichter ausgegeben aus dem optischen Zweigkoppler an den Eingangsport des zweiten Wellenlängenauswahlschalters bereitstellt, und der das andere Licht in die Übertragungsleitung (L) ausgibt.

26. Optischer Add/Drop-Multiplexer nach Anspruch 10, wobei ein Dispersionskompensationsteil (61), das eine Wellenlängendispersionscharakteristik hat, die der Wellenlängendispersionscharakteristik der Übertragungsleitung entgegengesetzt ist, ist in dem Strahlengang an der Stelle vor dem Hinzufügungsteil bereitgestellt ist.

27. Optischer Add/Drop-Multiplexer nach Anspruch 26, wobei ein optischer Verstärker (62) zur Kompensation einer Einfügungsdämpfung des Dispersionskompensationsteil vor der Stelle des Dispersionskompensationsteils bereitgestellt ist.

28. Optischer Add/Drop-Multiplexer nach Anspruch 26, wobei der Dispersionskompensationsteil (61) mittels Verwendung einer Dispersionskompensationsfaser konstruiert wird.

29. Optischer Add/Drop-Multiplexer nach Anspruch 26, wobei ein Betrag der Wellenlängendispersionskompensation des Dispersionskompensationsteils (61) veränderbar ist.

30. Optischer Add/Drop-Multiplexer nach Anspruch 10, wobei der Hinzufügungsteil unter Verwendung eines ersten Wellenlängenauswahlschalters (27) konstruiert ist, der eine Mehrzahl von Eingangsports und einen Ausgangsport hat, und
sowohl der Entfernungsteil als auch der Sperrteil haben einen zweiten Wellenlängenauswahlschalter, die einen Eingangsport und eine Mehrzahl von Ausgangsports haben.

31. Optischer Add/Drop-Multiplexer nach Anspruch 30, wobei der zweite Wellenlängenauswahlschalter (27) wellenlängen-gemultiplextes Licht erhält, eingegeben von der Übertragungsleitung durch einen der Mehrzahl von Eingangsports, und der Hinzufügungslicht durch die anderen Eingangsports erhält, und der das wellenlängen-gemultiplexte Licht und das Hinzufügungslicht multiplext, und der das gemultiplexte Licht aus dem Ausgangsport ausgibt.

32. Optischer Add/Drop-Multiplexer nach Anspruch 30, wobei der zweite Wellenlängenauswahlschalter (48) wellenlängen-gemultiplextes Licht, das durch das Verstärkungsteil mittels des Eingangsports ausgegeben wurde, erhält, und der Signallicht extrahiert, das mindestens eine Wellenlänge verschieden von dem Signallicht, das mittels des Hinzufügungsteils gemultiplext wurde, von dem wellenlängen-gemultiplexten Licht hat, und der das extrahierte Signallicht aus einem entsprechenden Ausgangsport ausgibt, und der das andere Licht von dem Ausgangsport verbunden mit der Übertragungsleitung ausgibt.

## Revendications

1. Multiplexeur optique d'ajout/élimination connecté à une ligne de transmission (L) dans laquelle une lumière multiplexée par répartition en longueur d'onde incluant une pluralité de lumières de signal ayant différentes longueurs d'onde se propage, capable d'ajouter ou d'éliminer une lumière de signal ayant au moins une longueur d'onde à/de la lumière multiplexée par répartition en longueur d'onde alimentée par la ligne de transmission (L), et de fournir en sortie la lumière multiplexée par répartition en longueur d'onde résultante à ladite ligne de transmission, comprenant :
une partie de blocage (1, 11, 11') destinée à bloquer une lumière ayant une longueur d'onde correspondant à la longueur d'onde de la lumière de signal à ajouter dans ledit multiplexeur optique d'ajout/élimination parmi une pluralité de lumières de signal incluses dans la lumière multiplexée par répartition en longueur d'onde alimentée par ladite ligne de transmission (L) ;
une partie d'ajout (2, 21, 12, 21', 27) destinée à multiplexer une lumière de signal avec la lumière fournie en sortie par ladite partie de blocage et à fournir en sortie la lumière résultante ;
une partie d'amplification en ligne (3, 31) destinée à amplifier la lumière multiplexée par répartition en longueur d'onde, dans laquelle la longueur d'onde de la lumière de signal à ajouter et les longueurs d'onde non bloquées par la partie de blocage sont multiplexées par répartition en longueur d'onde, fournie en sortie par ladite partie d'ajout, et à fournir en sortie la lumière amplifiée ; et
une partie d'élimination (4, 41, 41', 48, 49) destinée à bifurquer la lumière multiplexée par répartition en longueur d'onde fournie en sortie par ladite partie d'amplification en deux lumières, la partie d'élimination étant apte à éliminer une lumière de signal ayant une longueur d'onde différente de la longueur d'onde de lumière de signal multiplexée par ladite partie d'ajout de l'une de la lumière bifurquée, et à fournir en sortie l'autre lumière bifurquée à ladite ligne de transmission (L).

2. Multiplexeur optique d'ajout/élimination selon la revendication 1, dans lequel ladite partie de blocage comprend un bloqueur de longueur d'onde (11, 11') ayant une bande de longueur d'onde de blocage incluant la longueur d'onde de la lumière de signal à multiplexer par ladite partie d'ajout,
ladite partie d'ajout comprend un coupleur optique (21, 21') ayant deux ports d'entrée et un port de sortie, multiplexant une lumière de signal ayant traversé ledit bloqueur de longueur d'onde et alimentée vers l'un des ports d'entrée et une lumière de signal ayant la même longueur d'onde que celle d'une lumière de signal bloquée par ladite partie de blocage et alimentée vers l'autre port d'entrée, et fournissant en sortie la lumière de signal multiplexée provenant du port de sortie ; et
ladite partie d'élimination inclut un coupleur de bifurcation optique (41, 41') ayant un port d'entrée et deux ports de sortie, recevant la lumière multiplexée par répartition en longueur d'onde fournie en sortie par ladite partie d'amplification par le port d'entrée, bifurquant la lumière d'entrée en deux lumières, et fournissant en sortie les lumières provenant des ports de sortie, et un circuit filtrant optique destiné à extraire une lumière de signal ayant au moins une longueur d'onde différente de celle d'une lumière de signal multiplexée par ladite partie d'ajout provenant de la lumière multiplexée par répartition en longueur d'onde fournie en sortie par l'un des ports de sortie du coupleur de bifurcation optique.

3. Multiplexeur optique d'ajout/élimination selon la revendication 2, dans lequel un filtre d'ajout de rejet (12) est utilisé en tant que ledit bloqueur de longueur d'onde et ledit coupleur optique.

4. Multiplexeur optique d'ajout/élimination selon la revendication 2, dans lequel ladite partie d'élimination a un circuit de commande (51) qui peut changer un rapport de bifurcation dudit coupleur de bifurcation optique et commande le rapport de bifurcation dudit coupleur de bifurcation optique sur la base de la longueur d'onde de la lumière de signal extraite par ledit circuit filtrant optique.

5. Multiplexeur optique d'ajout/élimination selon la revendication 2, dans lequel ladite partie d'ajout a un atténuateur optique variable (24) inséré sur un chemin optique connecté à au moins l'un des ports d'entrée dudit coupleur optique (21), et un circuit de commande (51) destiné à commander une quantité d'atténuation dudit atténuateur optique variable de sorte que des puissances de lumière de signal des différentes longueurs d'onde fournies en sortie par les ports de sortie dudit coupleur optique deviennent les mêmes.

6. Multiplexeur optique d'ajout/élimination selon la revendication 2, dans lequel ladite partie d'ajout a un circuit de commande (51) qui peut changer un rapport de multiplexage de puissance de lumière fournie en entrée à chacun des ports d'entrée dudit coupleur optique et commande ledit rapport de multiplexage pour que les puissances de lumière de signal de différentes longueurs d'onde fournies en sortie par les ports de sortie du coupleur optique deviennent égales les unes aux autres.

7. Multiplexeur optique d'ajout/élimination selon la revendication 1, comprenant en outre :
deux commutateurs optiques (32A, 32B) ménagés sur un chemin optique connecté à une borne d'entrée et un chemin optique connecté à une borne de sortie de ladite partie d'amplification (31) ;
un circuit de déviation (32) destiné à connecter directement les commutateurs optiques ; et
un circuit de commande de commutateur (53') destiné à commander chacun desdits commutateurs optiques pour qu'une lumière multiplexée par répartition en longueur d'onde traverse ladite partie d'amplification lorsque ladite partie d'amplification fonctionne normalement, et traverse ledit circuit de déviation lorsqu'une défaillance se produit dans ladite partie d'amplification.

8. Multiplexeur optique d'ajout/élimination selon la revendication 7, dans lequel l'un desdits deux commutateurs optiques (32A, 32B) est ménagé sur un chemin optique au premier stade de ladite partie de blocage et l'autre commutateur optique est ménagé sur un chemin optique au stade suivant de ladite partie d'élimination.

9. Multiplexeur optique d'ajout/élimination selon la revendication 1, comprenant en outre un circuit de traitement de lumière de commande de supervision destiné à recevoir une lumière de commande de supervision alimentée par ladite ligne de transmission (L), à obtenir des informations de longueur d'onde de lumière de signal, à générer une lumière de commande de supervision, et à transmettre la lumière de commande de supervision générée à ladite ligne de transmission,
dans lequel le circuit de traitement de lumière de commande de supervision a la fonction de fournir en sortie une lumière de commande de supervision fournie en entrée par ladite ligne de transmission telle quelle à ladite ligne de transmission au moment de la défaillance d'alimentation.

10. Multiplexeur optique d'ajout/élimination connecté à une ligne de transmission (L) dans lequel une lumière multiplexée par répartition en longueur d'onde incluant une pluralité de lumières de signal ayant différentes longueurs d'onde se propage, capable d'ajouter ou d'éliminer une lumière de signal ayant au moins une longueur d'onde à/de la lumière multiplexée par répartition en longueur d'onde alimentée par la ligne de transmission (L), et de fournir en sortie la lumière multiplexée par répartition en longueur d'onde résultante à ladite ligne de transmission, comprenant :
une partie d'ajout (2, 21, 12, 21', 27) destinée à multiplexer une lumière de signal ayant au moins une longueur d'onde avec une lumière multiplexée par répartition en longueur d'onde fournie en entrée par ladite ligne de transmission et à fournir en sortie la lumière résultante;
une partie d'amplification en ligne (3, 31) destinée à amplifier la lumière multiplexée par répartition en longueur d'onde, dans laquelle ladite au moins une longueur d'onde est multiplexée par répartition en longueur d'onde avec la lumière multiplexée par répartition en longueur d'onde fournie en entrée par ladite ligne de transmission, fournie en sortie par ladite partie d'ajout, et à fournir en sortie la lumière amplifiée ;
une partie d'élimination (4, 41, 41', 48, 49) destinée à bifurquer la lumière multiplexée par répartition en longueur d'onde fournie en sortie par ladite partie d'amplification en deux lumières, la partie d'élimination étant apte à extraire une lumière de signal ayant une longueur d'onde différente de la longueur d'onde de lumière de signal multiplexée par ladite partie d'ajout de l'une de la lumière bifurquée; et
une partie de blocage (1', 13, 13') destinée à bloquer une lumière de signal ayant la même longueur d'onde que celle de la lumière de signal extraite par ladite partie d'élimination parmi une pluralité de lumières de signal incluses dans l'autre lumière bifurquée alimentée par ladite partie d'élimination, et à fournir en sortie la lumière résultante à ladite ligne de transmission.

11. Multiplexeur optique d'ajout/élimination selon la revendication 10, dans lequel ladite partie d'ajout comprend un coupleur optique (21, 21') ayant deux ports d'entrée et un port de sortie, multiplexant la lumière multiplexée par répartition en longueur d'onde issue de ladite ligne de transmission, qui est alimentée vers l'un des ports d'entrée et la lumière de signal ayant au moins une longueur d'onde alimentée vers l'autre port d'entrée, et de fournir en sortie la lumière de signal multiplexée issue du port de sortie,
ladite partie d'élimination inclut : un coupleur de bifurcation optique (41, 41') ayant un port d'entrée et deux ports de sortie, recevant la lumière multiplexée par répartition en longueur d'onde fournie en sortie par ladite partie d'amplification par le port d'entrée, bifurquant la lumière d'entrée en deux lumières, et fournissant en sortie les lumières provenant des ports de sortie ; et un circuit filtrant optique destiné à extraire une lumière de signal ayant au moins une longueur d'onde différente de celle de la lumière de signal multiplexée par ladite partie d'ajout de la lumière multiplexée par répartition en longueur d'onde fournie en sortie par l'un des ports de sortie du coupleur de bifurcation optique, et
ladite partie de blocage inclut un bloqueur de longueur d'onde (13, 13') ayant une bande de longueur d'onde de blocage incluant la longueur d'onde de la lumière de signal à extraire par ledit circuit filtrant optique.

12. Multiplexeur optique d'ajout/élimination selon la revendication 11, dans lequel ladite partie d'élimination a un circuit de commande (51) qui peut changer un rapport de bifurcation dudit coupleur de bifurcation optique et commande le rapport de bifurcation dudit coupleur de bifurcation optique sur la base de la longueur d'onde de lumière de signal extraite par ledit circuit filtrant optique.

13. Multiplexeur optique d'ajout/élimination selon la revendication 11, dans lequel ladite partie d'ajout a un atténuateur optique variable inséré sur un chemin optique connecté à au moins l'un des ports d'entrée dudit coupleur optique, et un circuit de commande (51) destiné à commander une quantité d'atténuation dudit atténuateur optique variable de sorte que des puissances de lumière de signal des différentes longueurs d'onde fournies en sortie par les ports de sortie dudit coupleur optique deviennent les mêmes.

14. Multiplexeur optique d'ajout/élimination selon la revendication 11, dans lequel ladite partie d'ajout a un circuit de commande (51) qui peut changer un rapport de multiplexage de puissance de lumière fournie en entrée à chacun des ports d'entrée dudit coupleur optique et commande ledit rapport de multiplexage pour que les puissances de lumière de signal de différentes longueurs d'onde fournies en sortie par les ports de sortie du coupleur optique deviennent égales les unes aux autres.

15. Multiplexeur optique d'ajout/élimination selon la revendication 10, comprenant en outre :
deux commutateurs optiques (32A, 32B) ménagés sur un chemin optique connecté à une borne d'entrée et un chemin optique connecté à une borne de sortie de ladite partie d'amplification ;
un circuit de déviation (32) destiné à connecter directement les commutateurs optiques ; et
un circuit de commande de commutateur destiné à commander chacun desdits commutateurs optiques pour qu'une lumière multiplexée par répartition en longueur d'onde traverse ladite partie d'amplification lorsque ladite partie d'amplification fonctionne normalement, et traverse ledit circuit de déviation lorsqu'une défaillance se produit dans ladite partie d'amplification.

16. Multiplexeur optique d'ajout/élimination selon la revendication 15, dans lequel l'un desdits deux commutateurs optiques (32A, 32B) est ménagé sur un chemin optique au premier stade de ladite partie de blocage et l'autre commutateur optique est ménagé sur un chemin optique au stade suivant de ladite partie de blocage.

17. Multiplexeur optique d'ajout/élimination selon la revendication 10, comprenant en outre un circuit de traitement de lumière de commande de supervision destiné à recevoir une lumière de commande de supervision alimentée par ladite ligne de transmission (L), à obtenir des informations de longueur d'onde de lumière de signal, à générer une lumière de commande de supervision, et à transmettre la lumière de commande de supervision générée à ladite ligne de transmission,
dans lequel le circuit de traitement de lumière de commande de supervision a la fonction de fournir en sortie une lumière de commande de supervision fournie en entrée par ladite ligne de transmission telle quelle à ladite ligne de transmission au moment d'une défaillance d'alimentation.

18. Multiplexeur optique d'ajout/élimination selon la revendication 1, dans lequel une partie de compensation de dispersion (61) ayant une caractéristique de dispersion de longueur d'onde opposée à la caractéristique de dispersion de longueur d'onde de ladite ligne de transmission est ménagée sur le chemin optique au premier stade de ladite partie d'ajout.

19. Multiplexeur optique d'ajout/élimination selon la revendication 18, dans lequel un amplificateur optique (62) destiné à compenser une perte d'insertion de ladite partie de compensation de dispersion est ménagé au premier stade de ladite partie de compensation de dispersion.

20. Multiplexeur optique d'ajout/élimination selon la revendication 18, dans lequel ladite partie de compensation de dispersion (61) est construite par utilisation d'une fibre de compensation de dispersion.

21. Multiplexeur optique d'ajout/élimination selon la revendication 18, dans lequel une quantité de compensation de dispersion de longueur d'onde de ladite partie de compensation de dispersion (61) est variable.

22. Multiplexeur optique d'ajout/élimination selon la revendication 1, dans lequel chacune de ladite partie de blocage et de ladite partie d'ajout est construite par utilisation d'un premier commutateur sélectif de longueur d'onde (27) ayant une pluralité de ports d'entrée et un port de sortie, et
ladite partie d'élimination a un second commutateur sélectif de longueur d'onde (48) ayant un port d'entrée et une pluralité de ports de sortie.

23. Multiplexeur optique d'ajout/élimination selon la revendication 22, dans lequel ledit premier commutateur sélectif de longueur d'onde (27) reçoit une lumière multiplexée par répartition en longueur d'onde de ladite ligne de transmission par l'un de la pluralité de ports d'entrée, reçoit une lumière d'ajout vers les autres ports d'entrée, multiplexe une lumière de signal ayant des longueurs d'onde différentes de la longueur d'onde de ladite lumière d'ajout dans la lumière de signal ayant des longueurs d'onde incluses dans ladite lumière multiplexée par répartition en longueur d'onde à ladite lumière d'ajout, et fournit en sortie la lumière multiplexée issue du port de sortie.

24. Multiplexeur optique d'ajout/élimination selon la revendication 22, dans lequel ledit second commutateur sélectif de longueur d'onde (48) reçoit une lumière multiplexée par répartition en longueur d'onde qui est fournie en sortie par ladite partie d'amplification par le port d'entrée, extrait une lumière de signal ayant au moins une longueur d'onde différente de la longueur d'onde de lumière de signal multiplexée par ladite partie d'ajout de ladite lumière multiplexée par répartition en longueur d'onde, fournit en sortie la lumière de signal extraite d'un port de sortie correspondant, et fournit en sortie l'autre lumière de signal du port de sortie connecté à ladite ligne de transmission.

25. Multiplexeur optique d'ajout/élimination selon la revendication 22, dans lequel ladite partie d'élimination a un coupleur de bifurcation optique destiné à bifurquer une lumière multiplexée par répartition en longueur d'onde fournie en sortie par ladite partie d'amplification en deux lumières, alimente l'une des deux lumières fournies en sortie par le coupleur de bifurcation optique en direction du port d'entrée dudit second commutateur sélectif de longueur d'onde, et fournit en sortie l'autre lumière à ladite ligne de transmission (L).

26. Multiplexeur optique d'ajout/élimination selon la revendication 10, dans lequel une partie de compensation de dispersion (61) ayant une caractéristique de dispersion de longueur d'onde opposée à la caractéristique de dispersion de longueur d'onde de ladite ligne de transmission est ménagée sur le chemin optique au premier stade de ladite partie d'ajout.

27. Multiplexeur optique d'ajout/élimination selon la revendication 26, dans lequel un amplificateur optique (62) destiné à compenser une perte d'insertion de ladite partie de compensation de dispersion est ménagé au premier stade de ladite partie de compensation de dispersion.

28. Multiplexeur optique d'ajout/élimination selon la revendication 26, dans lequel ladite partie de compensation de dispersion (61) est construite par utilisation d'une fibre de compensation de dispersion.

29. Multiplexeur optique d'ajout/élimination selon la revendication 26, dans lequel une quantité de compensation de dispersion de longueur d'onde de ladite partie de compensation de dispersion (61) est variable.

30. Multiplexeur optique d'ajout/élimination selon la revendication 10, dans lequel ladite partie d'ajout est construite par utilisation d'un premier commutateur sélectif de longueur d'onde (27) ayant une pluralité de ports d'entrée et un port de sortie, et
chacune de ladite partie d'élimination et de ladite partie de blocage a un second commutateur sélectif de longueur d'onde ayant un port d'entrée et une pluralité de ports de sortie.

31. Multiplexeur optique d'ajout/élimination selon la revendication 30, dans lequel ledit premier commutateur sélectif de longueur d'onde (27) reçoit une lumière multiplexée par répartition en longueur d'onde fournie en entrée par ladite ligne de transmission par l'un de la pluralité de ports d'entrée, reçoit une lumière d'ajout par les autres ports d'entrée, multiplexe ladite lumière multiplexée par répartition en longueur d'onde et ladite lumière d'ajout, et fournit en sortie la lumière multiplexée issue du port de sortie.

32. Multiplexeur optique d'ajout/élimination selon la revendication 30, dans lequel ledit second commutateur sélectif de longueur d'onde (48) reçoit une lumière multiplexée par répartition en longueur d'onde fournie en sortie par ladite partie d'amplification par le port d'entrée, extrait une lumière de signal ayant au moins une longueur d'onde différente de celle d'une lumière de signal multiplexée par ladite partie d'ajout de ladite lumière multiplexée par répartition en longueur d'onde, fournit en sortie la lumière de signal extraite d'un port de sortie correspondant, et fournit en sortie l'autre lumière du port de sortie connecté à ladite ligne de transmission.
